# EUROPÄISCHE PATENTSCHRIFT

(11) **EP 4 164 830 B1**
(45) Veröffentlichungstag und Bekanntmachung des Hinweises auf die Patenterteilung: **01.05.2024**
(21) Anmeldenummer: 21731417.8
(22) Anmeldetag: 01.06.2021
(51) Int. Cl.: B22F 10/28, B22F 10/322, B22F 12/70, B33Y 10/00, B33Y 30/00, B29C 64/371

(54) **FERTIGUNGSVORRICHTUNG MIT GROSSFLÄCHIGEM ABSENKGASSTROM**
MANUFACTURING DEVICE HAVING LARGE-AREA SINKING GAS FLOW
DISPOSITIF DE FABRICATION AYANT UN FLUX DE GAZ DESCENDANT SUR UNE GRANDE SURFACE

(30) Priorität: 10.06.2020 DE 102020115414
(43) Veröffentlichungstag der Anmeldung: 19.04.2023
(73) Patentinhaber: Trumpf Laser- und Systemtechnik GmbH, 71254 Ditzingen (DE)
(72) Erfinder: SCHAEDE, Florian, 70567 Stuttgart (DE); NEKIC, Robert, 71686 Remseck am Neckar (DE); MATATKO, Sebastian, 01796 Pirna (DE)
(74) Vertreter: Trumpf Patentabteilung
(86) Internationale Anmeldenummer: PCT/EP2021/064630
(87) Internationale Veröffentlichungsnummer: WO 2021/249820

(56) Entgegenhaltungen:
- WO-A1-2020/022172
- US-A1- 2016 121 398
- US-A1- 2018 333 779
- US-A1- 2020 061 655

## Beschreibung

Die vorliegende Erfindung betrifft eine Fertigungsvorrichtung zur generativen Fertigung eines dreidimensionalen Bauteils aus einem Pulver, wobei die Fertigungsvorrichtung insbesondere ein Schutzgassystem aufweist.

Die laserbasierte generative Fertigung von, insbesondere metallischen oder keramischen, Werkstücken basiert auf einem Verfestigen eines in Pulverform vorliegenden Ausgangsmaterials durch die Bestrahlung mit Laserlicht. Dieses Konzept - auch als selektives Laserschmelzen, Pulverbettfusion oder Laser Metal Fusion (LMF) bekannt - wird unter anderem in Maschinen für den (metallischen) 3D-Druck eingesetzt. Eine beispielhafte Maschine (hierin kurz LMF-Maschine) zur Herstellung von dreidimensionalen Produkten ist in der EP 2 732 890 A1 offenbart. Die Vorteile der generativen Fertigung sind allgemein eine einfache Herstellung von komplexen und individuell erstellbaren Teilen. Dabei können insbesondere definierte Strukturen im Innenraum und/oder kraftflussoptimierte Strukturen realisiert werden.

EP 3 023 228 A1 offenbart eine Fertigungsvorrichtung zur generativen Fertigung eines dreidimensionalen Bauteils, die eine Gasströmung über die Plattform zur Entfernung von z.B. Rauch aus der Wechselwirkungszone bereitstellt. Weitere Gaskreislaufkonfigurationen sind z.B. aus DE 10 2010 052 206 A1, DE 10 2006 014 835 A1, WO 2010/007394 A1, EP 1 839 781 A2, EP 3 147 047 A1 und US 9,592,636 B2 bekannt.

US 2018/333779 A1 offenbart eine Fließvorrichtung für eine Vorrichtung zur additiven Fertigung, in der Material schichtweise verfestigt wird, um ein Teil herzustellen. Die Fließvorrichtung umfasst ein erstes Element mit mindestens einer Einlassöffnung darin und ein zweites Element mit drei oder mehr stromabwärts gelegenen Öffnungen darin. Das erste und das zweite Element sind so miteinander verbunden, dass die stromabwärts gelegenen Öffnungen des zweiten Elements in Fluidverbindung mit der Einlassöffnung des ersten Elements stehen, wobei der kürzeste Fluidweg von der Einlassöffnung zu jeder stromabwärts gelegenen Öffnung im Wesentlichen der gleiche ist.

US 2020/061655 A1 offenbart ein additives Fertigungssystem umfassend ein Gehäuse, das eine Kammer definiert, eine Bauplattform, die innerhalb der Kammer angeordnet ist, und einen oberen Gaseinlass, der so konfiguriert ist, dass er einen oberen Gasstrom in einer ersten Richtung parallel zur Bauplattform zuführt. Das AM-System umfasst einen unteren Gaseinlass, der in der Kammer angeordnet und so konfiguriert ist, dass er einen unteren Gasstrom in einer zweiten Richtung zu einer Bodenwand der Kammer hin zuführt, und ein Strömungsleitsystem, das so konfiguriert ist, dass es den unteren Gasstrom empfängt und den unteren Gasstrom in der ersten Richtung parallel zur Bauplattform umleitet. Das AM-System umfasst eine oder mehrere Gaszufuhrvorrichtungen, die mit den oberen und unteren Gaseinlässen strömungsmäßig verbunden und so konfiguriert sind, dass sie eine oder mehrere Strömungseigenschaften der oberen und unteren Gasströme regulieren, sowie einen Gasauslass, der so konfiguriert ist, dass er die oberen und unteren Gasströme aus der Kammer ableitet.

WO 2020/022172 A1 offenbart eine Vorrichtung zur additiven Fertigung, umfassend eine untere Düse, die Inertgas in eine Kammer in einer horizontalen Richtung durch einen unteren Öffnungsabschnitt ausbläst, der in einem unteren Teil einer ersten Seitenwand ausgebildet ist, die die Kammer bildet, eine obere Düse, die das Inertgas in die Kammer durch einen oberen Öffnungsabschnitt ausbläst, der in einem oberen Teil der ersten Seitenwand ausgebildet ist, wobei die obere Düse eine Fensterdüse enthält, die das Inertgas entlang einer Innenfläche eines Fensterabschnitts einer die Kammer bildenden Deckplatte ausbläst, und eine schräge Düse, die das Inertgas schräg nach unten von dem oberen Abschnitt der ersten Seitenwand ausbläst.

US 2016/121398 A1 offenbart eine Vorrichtung zur Herstellung oder Reparatur eines dreidimensionalen Objekts, umfassend mindestens eine Baukammer für eine sukzessive schichtweise Verfestigung mindestens eines verfestigbaren Materials in vordefinierten Bereichen zum schichtweisen Aufbau des dreidimensionalen Objekts oder zur schichtweisen Reparatur einzelner Bereiche des dreidimensionalen Objekts innerhalb der Baukammer, und mindestens eine Einlassdüse und mindestens eine Absaugdüse für ein Prozessgas, wobei die Einlassdüse und die Absaugdüse derart angeordnet sind, dass eine Gasströmung erzeugt wird, die zumindest teilweise über eine in einer Baukammer ausgebildete Bauplattform hinweggeht.

Bei generativen Fertigungsvorrichtungen ist die Homogenität einer Gasströmung im Fertigungsraum für den Fertigungsprozess von großer Bedeutung. Inhomogenitäten in der Gasströmung können beispielsweise zu unterschiedlichen Werten bei den Teileeigenschaften in Bezug auf mechanische Eigenschaften, Dichte, Rauheit, Verfärbungen etc. führen. Ferner gilt es zu verhindern, dass der auf das Pulver gerichtete Laserstrahl von im Fertigungsraum befindlichen, durch die Wechselwirkung von Laserstrahl und Pulver entstehenden Rauch beeinflusst/geschwächt und auf diese Weise Inhomogenitäten und Fehler im Fertigungsprozess auftreten.

Mit der zunehmenden Vergrößerung des Bauraums in LMF-Maschinen, d.h., des für den schichtweisen Aufbau von Bauteilen vorgesehenen Teils des Innenraums, nimmt die Homogenität und Kontrollierbarkeit von herkömmlichen Schutzgasführungen ab. So sind entsprechende aufwendigere Konzepte zur homogenen Schutzgasführung beispielsweise im Bereich eines Volumens von 300 mm x 300 mm x 400 mm für den Bauraum notwendig.

Einem Aspekt dieser Offenbarung liegt die Aufgabe zugrunde, einen für den Fertigungsprozess günstigen Strömungsverlauf im Fertigungsraum bereitzustellen, insbesondere auch für einen großen Bauraum. Dabei soll der Strömungsverlauf weiterhin optische Komponenten schützen und eine Beeinflussung des Laserstrahls durch z.B. Rauch vermeiden, zumindest reduzieren.

Einem weiteren Aspekt dieser Offenbarung liegen die Aufgaben zugrunde, eine Strömung zu homogenisieren und/oder eine Gleichverteilung einer Strömung über einen im Verhältnis einer Einströmöffnung großen flächigen Ausströmbereich zu realisieren.

Zumindest eine dieser Aufgaben wird gelöst durch eine Fertigungsvorrichtung zur generativen Fertigung eines dreidimensionalen Bauteils aus einem Pulver nach Anspruch 1. Weiterbildungen sind in den Unteransprüchen angegeben.

In einem ersten Aspekt ist eine Fertigungsvorrichtung zur generativen Fertigung eines dreidimensionalen Bauteils aus einem Pulver mit einer Arbeitsfläche und einer Deckenwand offenbart, wobei die Arbeitsfläche und einer Deckenwand einen Fertigungsraum begrenzen und die Arbeitsfläche einen Pulverbettbereich umfasst. Die Deckenwand umfasst ein über dem Pulverbettbereich angeordnetes Schutzglas. Zwischen dem Schutzglas und dem Pulverbettbereich erstreckt sich eine Strahldurchtrittszone des Fertigungsraums, in den ein Laserstrahl durch das Schutzglas für die Bestrahlung von Pulver im Pulverbettbereich einstrahlbar ist. Ferner umfasst die Fertigungsvorrichtung ein Schutzgassystem. Das Schutzgassystem umfasst zwei an der Deckenwand, beidseitig der Strahldurchtrittszone angeordnete Ausströmkanäle, die jeweils eine Kanalwandung zur Abgrenzung eines Kanalinnenraums umfassen. Jeder der Ausströmkanäle umfasst gasdurchströmbare Kanalwandungsabschnitte in einem dem jeweils anderen Ausströmkanal zugewandten Innenseitenbereich der Kanalwandung und in einem der Arbeitsfläche zugewandten Unterseitenbereich der Kanalwandung. Die gasdurchströmbaren Kanalwandungsabschnitte sind entlang einer Kanalachse des Ausströmkanals über eine Ausströmlänge vorgesehen, die mindestens dem Ausmaß des Pulverbettbereichs in Richtung der Kanalachse entspricht, und wobei das Schutzgassystem ferner eine Einsaugöffnung zum Absaugen des Schutzgases aus dem Fertigungsraum umfasst.

In einigen Ausführungsformen der Fertigungsvorrichtung ist dem Innenseitenbereich ein entlang der Deckenwand gerichteter Schutzteilstrom zugeordnet. Der Schutzteilstrom fließt insbesondere teilweise entlang des Schutzglases. Dem Unterseitenbereich ist ein senkrecht auf die Arbeitsfläche gerichteter Senkteilstrom zugeordnet.

In einigen Ausführungsformen der Fertigungsvorrichtung kann bei mindestens einem der Ausströmkanäle der Innenseitenbereich in einem Übergangsbereich mit einer oder mehreren Fasenaußenflächen in den Unterseitenbereich übergehen, wobei mindestens eine der einen oder mehreren Fasenaußenflächen insbesondere eine rechteckige ebene Fläche ist.

In einigen Ausführungsformen der Ausströmkanäle kann bei mindestens einem der Ausströmkanäle der Innenseitenbereich in einem Übergangsbereich mit einer abgerundeten Außenfläche, insbesondere stufenlos, in den Unterseitenbereich übergehen, wobei die abgerundete Au-ßenfläche insbesondere einen Krümmungsradius im Bereich von z.B. 10 mm bis 200 mm oder einen variierenden Krümmungsradius aufweist.

In einigen Weiterbildungen ist dem Übergangsbereich mindestens ein in die Strahldurchtrittszone gerichteter Schutz-Senk-Teilstrom zugeordnet, der insbesondere unter einem Winkel im Bereich von 10° bis 80° zur Deckenwand in die Strahldurchtrittszone eintritt.

In einigen Ausführungsformen der Ausströmkanäle kann mindestens einer der gasdurchströmbaren Kanalwandungsabschnitte als Gewebeschicht oder Gewebelaminat mit mindestens zwei Gewebeschichten, insbesondere als Metallgewebelaminat, ausgebildet sein. Ein gasdurchströmbarer Kanalwandungsabschnitt kann die Gewebeschicht oder das Gewebelaminat Gewebemaschen, die als Ausströmöffnungen für einen strömungshomogenisierenden Durchtritt von Gas aus dem Kanalinnenraum in den Fertigungsraum vorgesehen sind, umfassen. Insbesondere können überlagerte Gewebeschichten unterschiedliche Maschenweiten aufweisen.

In einigen Ausführungsformen kann mindestens einer der gasdurchströmbaren Kanalwandungsabschnitte
- sich über mindestens 80 % oder 90 % einer Kanallänge hinweg erstrecken und/oder
- ein Vlieslaminat oder eine Lochplatte mit einer Anordnung von Ausströmöffnungen umfassen.

In einigen Ausführungsformen kann mindestens einer der Ausströmkanäle mindestens ein Leitblech umfassen, welches sich vom Innenseitenbereich in Richtung Mitte des Kanalraums erstreckt und durch welches entlang des Ausströmkanals strömendes Gas zu einem gasdurchströmbaren Kanalwandungsabschnitt des Innenseitenbereichs und optional des Zwischenbereichs hin ablenkbar ist. Das mindestens eine Leitblech kann insbesondere gebogen sein und/oder zumindest teilweise, insbesondere nahe der Mitte des Kanalinnenraums, mit Öffnungen versehen sein. Alternativ oder zusätzlich kann mindestens einer der Ausströmkanäle mindestens ein quer zur Kanalachse angeordnete Gewebeschicht, Gewebelaminat, Metallgewebelaminat oder Vlieslaminat umfassen.

In einigen Ausführungsformen kann das Schutzgassystem ferner einen Umlenkkasten mit einem Zuführkanal und zwei mit dem Zuführkanal fluid-verbundene Übergangkanalabschnitte umfassen, wobei
- jeder der Übergangkanalabschnitte auslassseitig mit einem der Ausströmkanäle fluid-verbunden ist, und
- mindestens einer der Übergangkanalabschnitte zur Auffächerung eines Gasstroms an einen Querschnitt des fluid-verbundenen Ausströmkanals angepasst ist, wobei insbesondere eine senkrecht zu einer Übergangkanalachse vorliegende Zuführkanalbreite mindestens 80% einer senkrecht zu einer Kanalachse des Ausströmkanals vorliegenden Ausströmkanalbreite beträgt.

In einigen Weiterbildungen des Zuführkanalsystems kann einer der Übergangkanalabschnitte mit einem der Ausstromkanäle unter einem Winkel zwischen einer Übergangkanalachse und einer Kanalrichtung des Ausströmkanals in einem Bereich von 80° bis 100° miteinander fluidverbunden sein. Alternativ oder zusätzlich können die Übergangkanalabschnitte und die Ausstromkanäle im Verbindungsbereich jeweils mit einem abgeflachten Querschnitt mit einem Breite-zu-Tiefe-Verhältnis von mindestens 2:1 ausgebildet sein.

In einigen Weiterbildungen des Zuführkanalsystems kann mindestens einer der Übergangkanalabschnitte in eine sich zwischen Arbeitsfläche und Deckenwand erstreckende und den Fertigungsraum begrenzende Rückwand der Fertigungsvorrichtung integriert sein oder sich entlang dieser erstrecken.

In einigen Ausführungsformen kann das Schutzgassystem ferner ein Flächenstromkanalsystem zum Bereitstellen eines Oberflächenstroms umfassen, der über die Arbeitsfläche strömt. In einigen Ausführungsformen kann das Flächenstromkanalsystem einen Flächenstromabgabeabschnitt und einen Ansaugabschnitt aufweisen. Der Flächenstromabgabeabschnitt kann dazu ausgebildet sein,
- Gas zu mindestens einer Auslassöffnung zu führen, die sich streifenförmig entlang der Arbeitsfläche erstreckt, und
- ein gleichmäßiges Einströmen des Gases in den Fertigungsraum zu bewirken, und der Ansaugabschnitt dazu ausgebildet ist,
- Gas aus dem Fertigungsraum durch die Einsaugöffnung abzusaugen, wobei sich die Einsaugöffnung streifenförmig entlang der Arbeitsfläche erstreckt, und
- ein gleichmäßiges Einsaugen von Gas aus dem Fertigungsraum zu bewirken.

In einigen Weiterbildungen des Flächenstromkanalsystems kann der Flächenstromabgabeabschnitt einen flächigen Zuführkanal aufweisen, dem eine Strömungsrichtung zugeordnet ist, die in einem Winkel in einem Bereich von 70° bis 110°, insbesondere von 80° bis 100° zur Strömungsrichtung des von der Auslassöffnung austretenden Flächenstroms verläuft.

In einigen Weiterbildungen des Flächenstromkanalsystems kann der Ansaugabschnitt ein Profilformteil umfassen, das die Einsaugöffnung auf der Seite der Deckenwand oder der Seite der Arbeitsfläche begrenzt und weist einen nasenförmigen, insbesondere parabelförmigen, Querschnitt auf.

In einigen Weiterbildungen der Fertigungsvorrichtung kann das Schutzgassystem einen Strömungsverlauf ausbilden, der umfasst
als Primärströmungskomponente:
- den Oberflächenstrom, der mit einer Höhe von mindestens 5 mm bis zu beispielsweise 30 mm und mehr, beispielsweise 100 mm und mehr, z.B. ca. 60 mm, über die Arbeitsfläche strömt, und
als Sekundärströmungskomponente:
- die Schutzteilströme, die von beiden Ausströmkanälen an der Deckenwand entlang strömen, aufeinandertreffen und dann gemeinsam in Richtung der Arbeitsfläche weiterströmen,
- die Senkteilströme, die von den Unterseitenbereichen zur Arbeitsfläche strömen, und
- optional weitere Schutz-Senk-Teilströme, die aus den Übergangsbereichen schräg in die Strahldurchtrittszone einströmen und dann in Richtung der Arbeitsfläche weiterströmen, wodurch sich eine Absenkströmung in der Strahldurchtrittszone hin zur Arbeitsfläche ausbildet, die zusammen mit dem Oberflächenstrom durch die Absaugöffnung aus dem Fertigungsraum abgesaugt wird.

Die hierin beschriebenen Konzepte betreffen insbesondere Fertigungsvorrichtungen, bei denen durch die Positionierung und Ausdehnung der gasdurchströmbaren Kanalwandungsabschnitte die Ausbildung einer homogenen Schutzgasströmung im Fertigungsraum ermöglicht wird, die durch einen großflächigen Senkteilstrom sowie einen Schutzteilstrom geprägt ist. Auf diese Weise kann verhindert werden, dass durch aufsteigenden Rauch der Fertigungsprozess bzw. die Fertigungsqualität beeinträchtigt wird. Denn zum einen kann Rauch durch den großflächigen Senkteilstrom daran gehindert werden, im Fertigungsraum aufzusteigen und den Laserstrahl zu beeinflussen. Zum anderen kann der Rauch durch den Schutzteilstrom daran gehindert wird, sich an einem Schutzglas abzulagern.

Dadurch, dass das Schutzgas über die gesamte Ausströmlänge (die mindestens dem Ausmaß des Pulverbetts in der Kanalrichtung entspricht) durch die gasdurchströmbaren Kanalwandungsabschnitte in den Fertigungsraum einströmen kann, wird im Bereich des Pulverbetts ein besonders gleichmäßiger, homogener Strömungsverlauf ermöglicht, was der Qualität des Fertigungsprozesses zuträglich ist. Der Ausbildung eines homogenen Strömungsverlaufs im Fertigungsraum zuträglich ist es auch, wenn der Übergangsbereich, in dem der Innenseitenbereich in den Unterseitenbereich übergeht, entweder durch eine oder mehrere Fasenaußenflächen oder eine abgerundete Außenfläche gekennzeichnet ist.

Die Ausströmung aus einem Ausströmkanal erfolgt insbesondere gerichtet und mit einer homogenen Geschwindigkeitsverteilung über die gesamte Fläche. Dabei sollen möglichst keine Strömungshotspots, Verwirbelungen oder Rezirkulationen generiert werden.

Dies kann insbesondere dadurch realisiert werden, dass mindestens eine der gasdurchlässigen Kanalwandungsabschnitte mit einem Gewebe ausgebildet wird. Ein gasdurchlässiger Kanalwandungsabschnitt kann beispielsweise als eine Gewebeschicht oder ein mindestens zwei Gewebeschichten umfassendes Gewebelaminat ausgeführt sein.

Ein Gewebe ist flächig ausgebildet, sodass sich eine Gewebefläche üblicherweise quer zum Gasstrom erstrecken und diesen vollständig abdecken kann. Ein Gewebe kann eine Anordnung aus einem fadenartig ausgebildeten Material aufweisen, beispielsweise ein Metalldraht mit rundem oder mehreckigem Querschnitt. Das Gewebe bildet eine Mehrzahl von benachbarten Maschen aus, wobei die zu einer Masche gehörenden Materialabschnitte eine (Durchgangs-) Öffnung begrenzen. Der Abstand zwischen zwei Materialabschnitte, die eine Öffnung auf gegenüberliegenden Seiten begrenzen, wird als Maschenweite bezeichnet.

Beispielsweise kann die Anordnung aus dem fadenartig ausgebildeten Material aus sich kreuzenden Metalldrahtabschnitten aufgebaut werden, die sich in einer Draufsicht auf die Gewebefläche unter einem Winkel von beispielsweise ca. 90° (rechtwinklige Gewebemasche) oder 60°/120° mustermäßig kreuzen. Der Fachmann wird erkennen, dass in der vorliegenden Anwendung verschiedenste Kreuzungswinkel eingesetzt werden können.

Die Maschenweite sowie die Anzahl der Gewebeschichten können mit Blick auf die jeweilige Wirkung auf die Strömung gewählt werden. Durch Anpassen der Maschenweiten und eine Reihenschaltung mehrerer Gewebeschichten in einem Gewebelaminat kann für ein Fluid in z.B. einen Gaskreislauf einer generativen Vorrichtung eine definierten Druckdifferenz zwischen den beiden Seiten eingestellt werden, sodass eine gewünschte Durchlässigkeit des Gewebelaminat für das Fluid realisiert werden kann. Die Durchlässigkeit oder Permeabilität kann auch als Widerstandsbeiwert bezeichnet werden. Je höher dieser Widerstandsbeiwert ist, desto homogener kann sich die Geschwindigkeitsverteilung ausbilden. Die Anordnung des Gewebelaminats kann somit auch eine benutzerdefinierte Geschwindigkeitsverteilung zulassen, beispielsweise unterschiedliche Austrittsgeschwindigkeiten für unterschiedliche Flächensegmente.

Alternativ können die gasdurchlässigen Kanalwandungsabschnitte beispielsweise als Lochbleche ausgebildet werden oder aus einem Vlies oder einem mehrschichtigen Vlieslaminat bestehen oder diese zumindest abschnittsweise umfassen.

Durch die Ausgestaltung von einem im Ausströmkanal zusätzlich angebrachten (insbesondere gebogenen) Leitblechs kann beeinflusst werden, in welchem Volumenstromverhältnis der Schutzteilstrom, der Senkteilstrom und ggf. der Schutz-Senk-Teilstrom zueinanderstehen. Öffnungen, die das Leitblech aufweisen kann (Perforationen), können dazu beitragen, dass sich eine Strömung während der Umlenkung durch ein Leitbleich auf der Saugseite des Leitblechs nicht von diesem unter Ausbildung von Verwirbelungen ablöst; ebenso wie eine quer zur Kanalrichtung angeordnete Gewebeschicht, ein Gewebelaminat, ein Metallgewebelaminat oder ein Vlieslaminat, kommt dies der Homogenisierung der in den Fertigungsraum einströmenden Strömung zugute.

Das hierin offenbarte Schutzgassystem kann einen flächendeckenden Senkstrom und einen effizienten Optik-Sperrstrom als eine Sekundärströmung ausbilden, deren Strömungsverlauf ein konvektiv getriebenes Aufsteigen von Schmauchpartikeln effektiv verhindern kann. Ferner kann die gleichmäßige Sekundärströmung die Prozesszone (den Fertigungsraum) effizienter spülen. So können auch bei langen Baujobs eine "sauberere" Prozessatmosphäre und "saubere" Optikkomponenten einen robusteren Fertigungsprozess aufgrund einer geringeren Partikelkonzentration gewährleisten. Überdies kann ein Strömungskonzept umgesetzt werden, das aufgrund von Primär- und einer Sekundärströmung eine geringe Komplexität aufweist. Ferner kann der Fertigungsprozess robuster hinsichtlich einer variablen Aufteilung der Volumenströme werden; insbesondere können Schwankungen in einer Strömungseinstellung innerhalb eines Einstellbereichs unkritischer werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Sicht in einen Fertigungsraum einer beispielhaften Fertigungsvorrichtung,
- Fig. 2: eine schematische räumliche Vertikalschnittansicht der in Fig. 1 angedeuteten Fertigungsvorrichtung,
- Fig. 3: eine schematische Aufsicht auf eine Rückwand der in Fig. 1 angedeuteten Fertigungsvorrichtung,
- Fig. 4: eine schematische Aufsicht auf eine Deckenwand der in Fig. 1 angedeuteten Fertigungsvorrichtung,
- Fig. 5: eine schematische räumliche Darstellung von beispielhaften Ausströmkanälen und einem Zuführkanalsystem eines Schutzgassystems der Fertigungsvorrichtung,
- Fig. 6: eine schematische horizontale Schnittdarstellung eines sich nahe einer Deckenwand der Fertigungsvorrichtung ausbildenden Sekundärschutzgasstroms,
- Fig. 7: eine schematische vertikale Schnittdarstellung des sich im Fertigungsraum der Fertigungsvorrichtung absenkenden Sekundärschutzgasstroms sowie eines über das Pulverbett strömenden Primärschutzgasstroms,
- Fig. 8: eine schematische räumliche Explosionsdarstellung eines Metallgewebelaminats,
- Fig. 9A: eine schematische Darstellung zur Verdeutlichung der Homogenisierung eines Geschwindigkeitsprofils mit einem Metallgewebelaminat,
- Fig. 9B: eine schematische Schnittdarstellung einer Gasauströmeinheit zur Aufweitung und homogenisierten Ausströmung eines Gasstroms mit einem Metallgewebelaminat,
- Fig. 10: eine schematische räumliche Darstellung von beispielhaften Ausströmkanälen mit Lochplatten,
- Fig. 11: eine schematische räumliche Darstellung einer beispielhaften Fertigungsvorrichtung mit einer Gasausströmeinheit ähnlich der Fig 9B und
- Fig.: 12A-12C beispielhafte Ausführungen eines Kanalbauteils für ein System zur Abgabe einer homogenisierten Ausgangsströmung.

Die hierin offenbarten Konzepte basieren zumindest teilweise auf der Erkenntnis der Erfinder, dass Rezirkulationen einer Schutzgasströmung im Bereich zwischen einer Prozessebene (hier insbesondere gebildet durch die Substratplatte mit dem Pulverbett) und einer Lasereinkoppelscheibe die Verweildauer von Prozessnebenprodukten verlängern können. Da die Prozessnebenprodukte Laserleistung absorbieren, kann bei Vorliegen von Rezirkulationen ein modifizierter, nicht gewünschter und unter Umständen auch willkürlicher LMF-Prozess stattfinden.

Um unter anderem derartigen Effekten entgegenzuwirken, schlagen die Erfinder einen großflächigen, gerichteten (sekundären) Schutzgasstrom vor. Dieser ist insbesondere dazu vorgesehen, einen kontinuierlichen Spüleffekt des Prozessbereichs im Fertigungsraum oder sogar der gesamten Fertigungskammer zu erzielen.

Bei einem erfindungsgemäß ausgebildeten sekundären Schutzgasströmungsverlauf in einer LMF-Maschine kann Schutzgas aus einem Schutzgasmodul ausgeströmt werden, das an einer Decke der LFM-Maschine befestigt ist. Das Schutzgasmodul kann insbesondere einen im Wesentlichen spiegelsymmetrisch zu einer Einkoppelscheibe der LMF-Maschine (hierin auch als Schutzglas bezeichnet) verlaufenden sekundären Schutzgasstrom erzeugen.

Teilströme des sekundären Schutzgasstroms strömen von beiden Seiten in Richtung Einkoppelscheibe und parallel an dieser entlang. Diese Teilströme treffen sich in der Mitte und strömen abwärts in Richtung auf die Substratplatte herab. Weitere Teilströme des sekundären Schutzgasstroms strömen beispielsweise von einer jeweils eben ausgebildeten Doppelfase des Schutzgasmoduls (oder auch einer unter einem Radius gekrümmten Fase) leicht schräg nach unten in Richtung Substratplatte herab. Weitere Teilströme des sekundären Schutzgasstroms strömen aus dem Boden des Schutzgasmoduls, der sich parallel zur Substratplatte erstreckt, gerade nach unten. Die verschiedenen Teilströme wirken zusammen, um eine möglichst laminare Strömung, die von oben auf die Substratplatte gerichtet ist, zu erreichen und so Verwirbelungen zu vermeiden/zu reduzieren.

Hinsichtlich eines Ausmaßes des sekundären Schutzgasströmungsverlaufs kann es ausreichen, wenn die Substratplatte von den herabströmenden Teilströmen abgedeckt wird. Insofern ist es nicht erforderlich, dass sich das Schutzgasmodul bis zur Frontwand und/oder bis zur Rückwand der Fertigungsvorrichtung erstreckt.

Zusammengefasst ist der Sekundärstrom als ein flächendeckender Senkstrom konzipiert, der eine stetige Spülung der Prozesszone mit "Reingas", d.h., dem Schutzgas, umsetzt.

Der sekundäre Schutzgasstrom wird mit einem primären Schutzgasstrom kombiniert. Der primäre Schutzgasstrom (kurz Primärstrom) ist dazu ausgebildet, Schmauch, der in der direkten Prozesszone, d.h., direkt über dem Pulverbett, entsteht, in Richtung einer Absaugöffnung mitzunehmen. Der Primärstrom kann durch den Abtrag des Schmauches unnötige Interaktionen zwischen Metalldampf, Schmauchpartikeln und dem Laserstrahl in der direkten Prozesszone verhindern oder zumindest reduzieren. Für einen positionsunabhängigen und robusten LMF-Prozess wird ein gleichmäßiger, quasi stationärer primärer Schutzgasströmungsverlauf mit einem homogenen Geschwindigkeitsverlauf über die Länge und Breite der Bauplattform (Substratplatte) eingesetzt.

Wie nachfolgend in Verbindung mit den Figuren erläutert wird, kann der vorgeschlagene sekundäre Schutzgasströmungsverlauf eine unzulässige Partikelbeladung und Partikelkonzentration innerhalb der Prozesskammer verhindern bzw. zumindest reduzieren. Durch den gerichteten und flächendeckenden Spülprozess trägt der Sekundärstrom dazu bei, dass die Partikelkonzentration in der gesamten Prozesszone reduziert werden kann. Dies kann eine für den Prozess kritische Defokussierung und Pointing-Stabilität eines Bearbeitungslaserstrahls positiv beeinflussen und zu einem stabilen Prozessfenster über der gesamten Bauplattform führen.

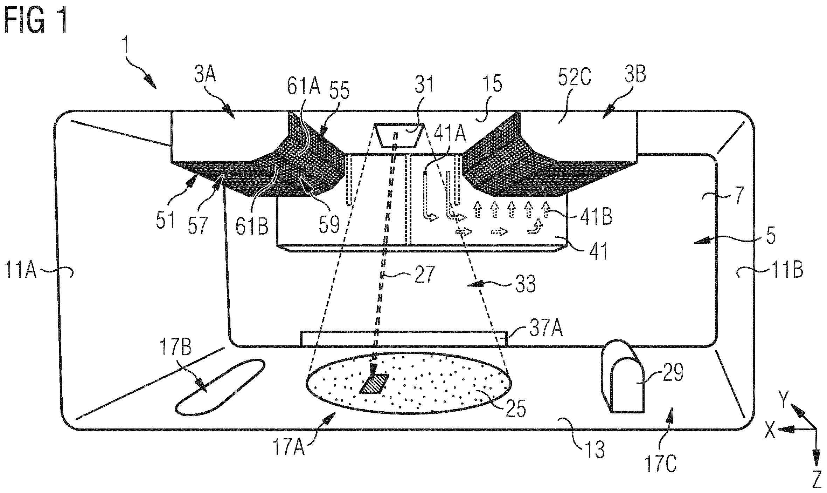

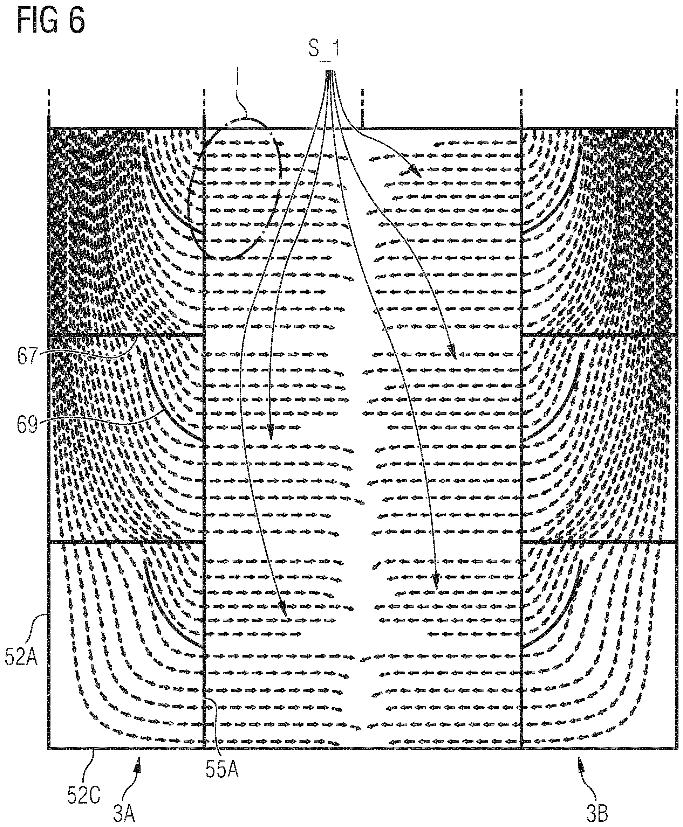

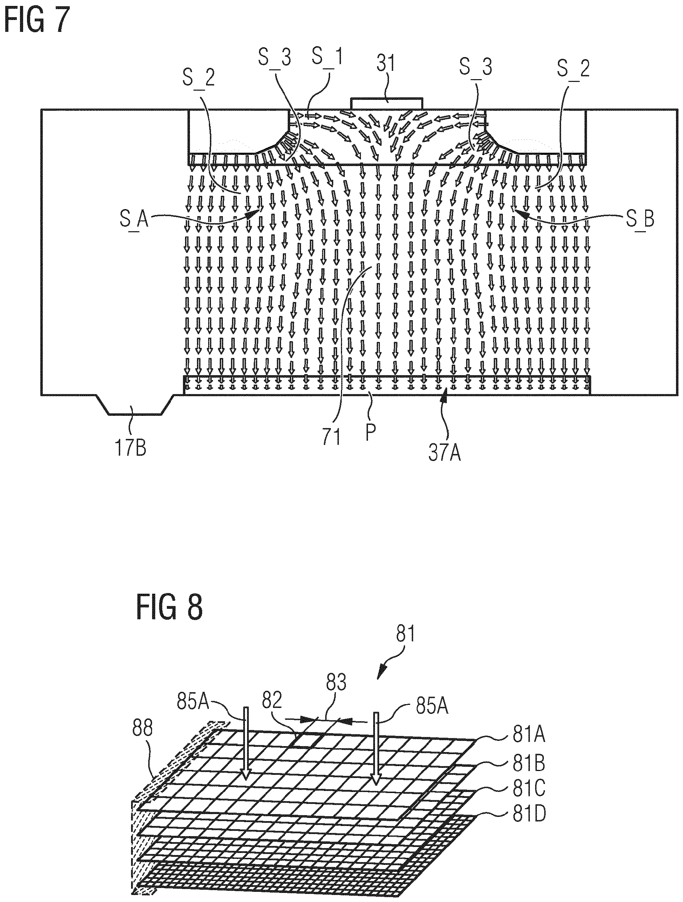

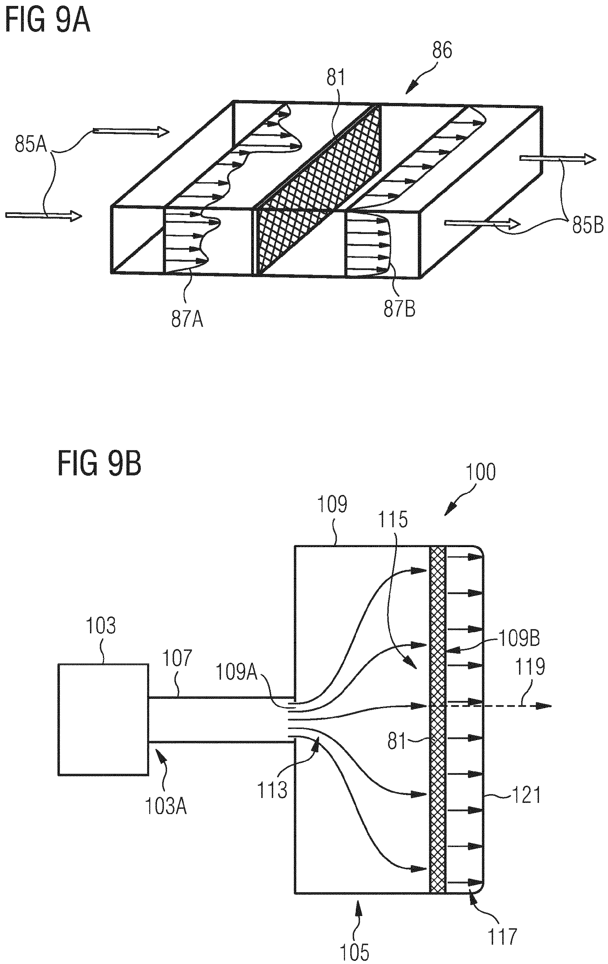

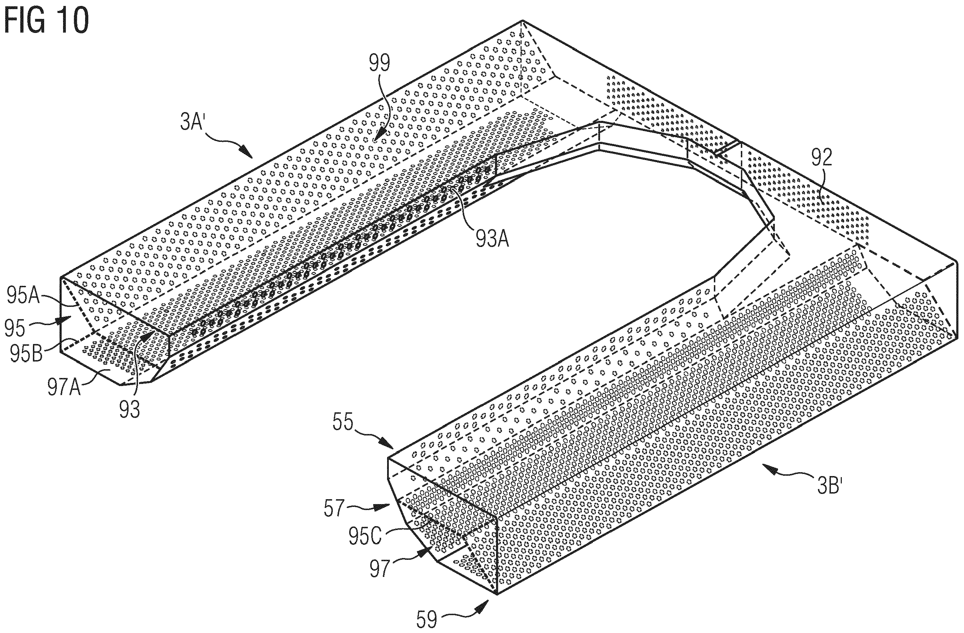

Mit Bezug zu den Figuren 1 bis 5 wird ein beispielhafter Aufbau einer Fertigungsvorrichtung zur generativen Fertigung eines dreidimensionalen Bauteils aus einem Pulver beschrieben, wobei in der Fertigungsvorrichtung ein sekundärer Schutzgasströmungsverlauf in Form eines flächendeckenden Senkstroms mit einem Schutzgasmodul, insbesondere mit zwei Ausströmkanälen, erzeugt wird. Anhand der Figuren 6 und 7 wird der Verlauf der Schutzgasströmung in der Fertigungsvorrichtung erläutert. Eine Homogenisierung einer Strömung mit einem Metallgewebelaminat im Allgemeinen, und im Speziellen einer Strömung z.B. in den Ausströmkanälen, wird in Verbindung mit den Figuren 8 und 9 erklärt. In Fig. 10 wird eine alternative Ausführungsform eines Schutzgasmoduls beschrieben.

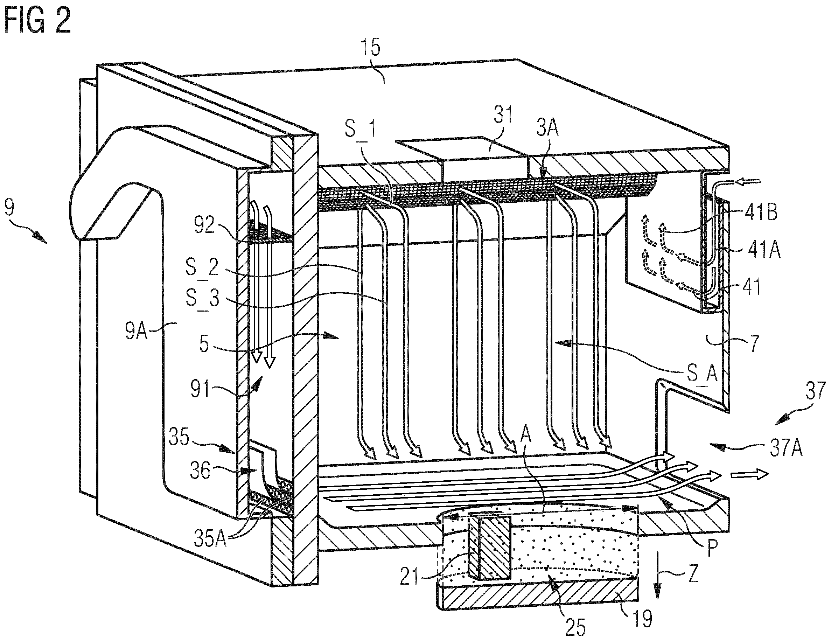

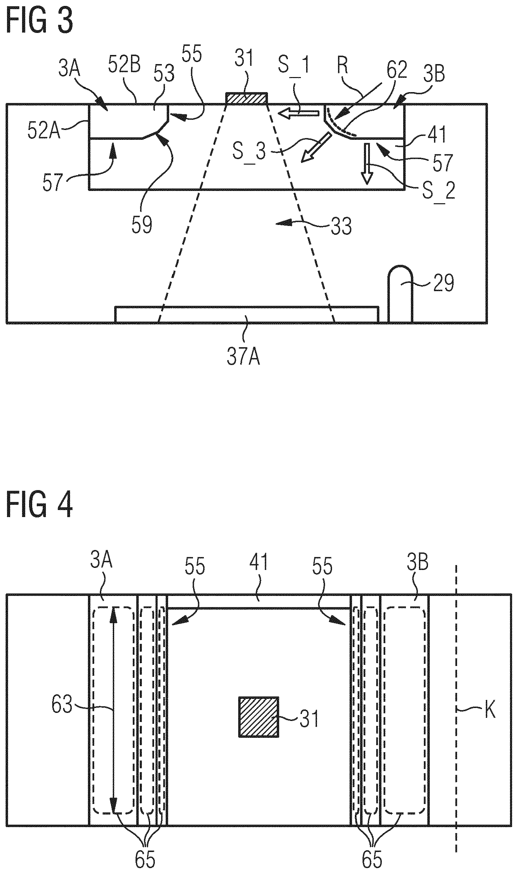

In den Figuren 1 bis 5 wird ein Ausführungsbeispiel einer Fertigungsvorrichtung 1 mit einem Schutzgasmodul, das zwei Ausströmkanälen 3A und 3B umfasst, gezeigt. Die Fertigungsvorrichtung 1 stellt einen Fertigungsraum 5 zur generativen Fertigung bereit. Der Fertigungsraum 5 wird von einer Rückwand 7, einer (in den Figuren 2 und 4 eine Tür 9A umfassende) Frontwand 9 und zwei Seitenwänden 11A und 11B in X- und Y-Richtung begrenzt. Nach unten bzw. oben (d.h., in Z-Richtung) wird der Fertigungsraum 5 durch eine Arbeitsfläche 13 und eine Deckenwand 15 begrenzt.

Die Arbeitsfläche 13 umfasst einen z.B. kreisförmigen Pulverbettbereich 17A oberhalb einer Substratplatte 19, auf der ein Bauteil 21 aus Pulver 25 durch Verschmelzen des Pulvers 25 mit einem Laserstrahl 27 erzeugt wird.

Die Arbeitsfläche 13 umfasst ferner einen Pulverablagebereich 17B und einen Pulvervorratsbereich 17C. Mittels eines Schiebers 29 kann das Pulver 25 vom Pulvervorratsbereich 17C in den Pulverbettbereich 17A und überschüssiges Pulver 25 weiter in den Pulverablagebereich 17B befördert werden.

Die Deckenwand 15 umfasst ein über dem Pulverbettbereich 17A angeordnetes Schutzglas 31, durch das der Laserstrahl 27 in den Fertigungsraum 5 eingekoppelt wird. Dort durchläuft der Laserstrahl 27 eine Strahldurchtrittszone 33, die sich zwischen dem Schutzglas 31 und dem Pulverbettbereich 17A erstreckt. Die Strahldurchtrittszone 33 ist der Bereich, in den der Laserstrahl 27 gelenkt werden kann, um auf der Oberfläche des Pulverbetts das Pulver 25 aufzuschmelzen.

Die Fertigungsvorrichtung 1 weist ferner ein Schutzgassystem auf, mit den die Gasbedingungen im Fertigungsraum 5 während der Fertigung des Bauteils 21 eingestellt werden können.

Das Schutzgassystem ist dazu ausgebildet, einen Primärschutzgasstrom P zu erzeugen, der über den Pulverbettbereich 17A, insbesondere über das Pulverbett, strömt. Dazu umfasst das Schutzgassystem ein Schutzgaskanalsystem, das in der Tür 9A in einem in Fig. 2 angedeuteten Flächenstromabgabeabschnitt 35 endet. Aus Öffnungen 35A des Flächenstromabgabeabschnitts 35 wird Schutzgas für den flächig ausgebildeten Primärschutzgasstrom P in den Fertigungsraum 5 nahe der Arbeitsfläche 13 abgegeben.

Der Primärschutzgasstrom P erstreckt sich bis zu einer Einsaugöffnung 37A eines schematisch angedeuteten Ansaugabschnitts 37 des Schutzgassystems. Im gezeigten Beispiel ist die Einsaugöffnung 37A an der Rückwand 7 nahe der Arbeitsfläche 13 und streifenförmig entlang der Arbeitsfläche 13 ausgebildet. Der Ansaugabschnitt 37 ist mit einer Absaugpumpe (nicht gezeigt) fluid verbunden.

Das Schutzgassystem ist ferner dazu ausgebildet, einen Sekundärschutzgasstrom S zu erzeugen. Der Sekundärschutzgasstrom S strömt von oben auf den Pulverbettbereich 17A, insbesondere auf das Pulverbett herab. Dazu umfasst das Schutzgassystem die an der Deckenwand 15, beidseitig der Strahldurchtrittszone 33 angeordneten Ausströmkanäle 3A, 3B. Das Schutzgassystem umfasst ferner einen Umlenkkasten 41, das sich an der Rückwand 7 der Fertigungseinrichtung 1 im Anschluss an die Deckenwand 15 erstreckt und die Ausströmkanäle 3A, 3B mit Schutzgas mit leicht erhöhten Druck (Druckdifferenz zum Fertigungsraum von z.B. wenigen Millibar, beispielsweise im Bereich von ein bis 3 mbar) versorgt. So kann sich beispielsweise für eine Austrittgeschwindigkeit von etwa 0,2 m/s ein Druckverlust von etwa 500 Pascal (5 Millibar) zwischen vor und hinter einem entsprechend konfigurierten Metallgewebelaminat ergeben, wobei ein höherer Druckverlust zu einer höheren Homogenität der Geschwindigkeit führen kann.

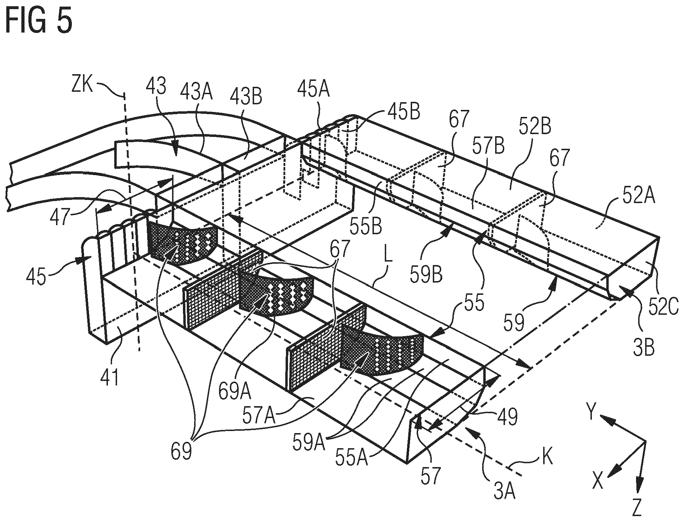

Fig. 5 zeigt in einer halbtransparenten Darstellung die Ausströmkanäle 3A, 3B sowie den Umlenkkasten 41. Die Ausströmkanäle 3A, 3B erstrecken sich entlang einer Kanalachse K in der X-Y-Ebene, wobei die Kanalachse K in Y-Richtung verläuft.

Die Zufuhr des Schutzgases zum Umlenkkasten 41 erfolgt von hinten durch die Rückwand 7 über einen Zuführkanal 43. Das Schutzgas wird in zwei Arme aufgeteilt, die jeweils einem der Ausströmkanäle 3A, 3B zugeordnet sind. Bei einem symmetrischen Aufbau der Ausströmkanäle 3A, 3B kann auch der Umlenkkasten 41 symmetrisch mit zwei Umlenkkastenabschnitten für die beiden Arme ausgebildet werden. Eine gleichmäßige Aufteilung der Zufuhr des Schutzgases in die Umlenkkastenabschnitte kann beispielsweise über eine mittig (beispielsweise in der Schnittebene der Fig. 2) angeordnete Finne 43A (oder mehrere Finnen) und/oder mit einem oder mehreren Lochblechen 43B (Lochblechschotten) bewirkt werden.

In jedem der Umlenkkastenabschnitte wird das Schutzgas zuerst nach unten abgelenkt und dann nach einer 180°-Umlenkung (Strömungspfeile 41A in Z-Richtung, Strömungspfeile 41B in "-Z"-Richtung, siehe Figuren 1 und 2) nach oben entlang einer Übergangkanalachse ZK zu den Ausströmkanälen 3A, 3B geführt. Entsprechend strömt das aufwärts in "-Z"-Richtung strömende Schutzgas orthogonal zu den Kanalachsen K der Ausströmkanäle 3A, 3B, wobei die Übergangkanalachse ZK bzgl. der Kanalachse K auch in einem Winkel kleiner 90°, beispielsweise in einem Bereich von 70° bis 90°, verlaufen kann.

Jeder der Umlenkkastenabschnitte bildet auslassseitig einen Übergangkanalabschnitt 45 aus, der mit einem der Ausströmkanäle 3A, 3B durch eine Öffnung fluid-verbunden ist. Der Übergangkanalabschnitt 45 kann abgerundet (wie beispielhaft in Fig. 5 angedeutet) oder eckig ausgebildet sein. Hier erfolgt eine weitere Umlenkung des Schutzgases von einer Strömung entlang der Übergangkanalachse ZK des Übergangkanalabschnitts 45 in eine Strömung entlang der Kanalachse K. Die Übergangkanalachse ZK und die Kanalachse K verlaufen unter einem Winkel im Bereich von 90°. Eine gleichmäßige Strömungslenkung wird beispielsweise durch abgerundete Wandungen 45A und entlang der Übergangkanalachse ZK ausgerichtete Strömungslamellen 45B erreicht.

Die Übergangkanalabschnitte 45 und die Öffnungen sind an eine Querschnittsfläche der Ausströmkanäle 3A, 3B in der X-Z-Ebene angepasst. Beispielsweise beträgt eine in der X-Z-Ebene liegende und in X-Richtung gegebene Zufuhrkanalbreite 47 der Öffnung des Übergangkanalabschnitts 45 mindestens 80% einer senkrecht zu einer Kanalrichtung K des Ausströmkanals 3A, 3B vorliegenden Ausströmkanalbreite 49.

Durch den in Z-Richtung entlang der Rückwand 7 angeordneten Umlenkkasten 41 kann eine sehr kompakte Zuführung des Schutzgases in die seitlich versetzten Ausströmkanäle 3A, 3B erfolgen. Zudem bietet die Umlenkung den Vorteil, dass Schutzgas den Ausströmkanälen 3A, 3B senkrecht zur X-Y-Ebene zugeleitet werden kann. Dadurch kann - im Unterschied zu einer Umlenkung in der X-Y-Ebene - eine Drall- und Trägheitsbehaftung des Schutzgases (in der X-Y-Ebene) bereits beim Einströmen in die Ausströmkanäle 3A, 3B reduziert werden. Ein rezirkulationsfreies Ausströmen des Schutzgases aus den Ausströmkanälen 3A, 3B in den Fertigungsraum 5 ist so schon am Anfang der Ausströmkanäle 3A, 3B gegeben (siehe Bereich I des Strömungsverlaufs in Fig. 6).

Die Ausströmkanäle 3A, 3B sind derart ausgebildet, dass ein Ausströmen des Schutzgases bevorzugt über eine gesamte Länge L der Ausströmkanäle 3A, 3B in die Fertigungskammer 5 und bevorzugt in die Strahldurchtrittszone 33 stattfindet. Dazu ist eine Änderung einer Strömungsrichtung entlang der Kanalachse K (in den Figuren 1 bis 5 verläuft die Hauptströmungsrichtung in den Ausströmkanälen 3A, 3B in "-Y"-Richtung) sowohl nach unten - als Senkstrom - als auch nach "innen" - als Sperrstrom für die Optik/das Schutzglas 31 - notwendig.

Jeder der beiden Ausströmkanäle 3A, 3B weist eine Kanalwandung 51 zur Abgrenzung eines Kanalinnenraums 53 auf. Nach oben und nach außen, d.h., auf den nicht zur Strahldurchtrittszone 33 gerichteten Seiten - insbesondere in den Figuren 3 und 5 als Kanalaußenwand 52A, Kanaldeckwand 52B und Kanalfrontwand 52C beschriftet), ist die Kanalwandung 51 gasdicht ausgeführt. Auf den zur Strahldurchtrittszone 33 gerichteten Seiten sind zur Abgabe von Schutzgas großflächige, von Schutzgas durchströmbare Kanalwandungsabschnitte in der Kanalwandung 51 vorgesehen.

Beispielsweise weisen dem jeweils anderen Ausströmkanal 3A, 3B zugewandte Innenseitenbereiche 55 der Kanalwandung 51 gasdurchströmbare Kanalwandungsabschnitte 55A, 55B auf. Der Arbeitsfläche 13 zugewandte Unterseitenbereiche 57 weisen gasdurchströmbare Kanalwandungsabschnitte 57A, 57B in der Kanalwandung 51 auf.

In der beispielhaft in Fig. 5 gezeigten Querschnittform geht der Innenseitenbereich 55 in einem Übergangsbereich 59 mit jeweils zwei (rechteckige ebene Flächen ausbildenden) Fasenaußenflächen 61A, 61B in den Unterseitenbereich 57 über. Auch im Übergangsbereich 59 sind gasdurchströmbare Kanalwandungsabschnitte 59A, 59B vorgesehen.

In Fig. 3 ist ergänzend ein gekrümmter Verlauf der Kanalwandung im Innenseitenbereich 55 und im Übergangsbereich 59 gezeigt. Man erkennt die abgerundeten Außenfläche 62, die insbesondere stufenlos in den Unterseitenbereich 57 übergehen kann. Die abgerundete Außenfläche kann insbesondere einen Krümmungsradius R im Bereich von 10 mm bis 200 mm oder einen in diesem Bereich variierenden Krümmungsradius aufweisen.

Die gasdurchströmbaren Kanalwandungsabschnitte 55A, 55B, 57A, 57B, 59A, 59B weisen jeweils eine sich entlang der Kanalrichtung K erstreckende Ausströmlänge auf. Bevorzugt erstrecken sich die gasdurchströmbaren Kanalwandungsabschnitte 55A, 55B, 57A, 57B, 59A, 59B möglichst weit durch den gesamten Fertigungsraum 5 (in Y-Richtung von hinten nach vorne). Allgemein ist die Ausströmlänge größer als ein Ausmaß A des Pulverbetts entlang der Kanalachse K. In Fig. 4 ist eine Ausströmlänge 63 für Kanalwandungsabschnitte angedeutet, die in Fig. 4 schematisch durch gestrichelt umrandete Bereiche 65 dargestellt sind. In Fig. 5 ist beispielsweise die gesamte Kanalwandung im Innenseitenbereich 55, Unterseitenbereich 57 und Übergangsbereich 59 gasdurchlässig ausgebildet, wie auch an den zugehörigen Strömungsverläufen der Figuren 6 und 7 erkannt werden kann. Um sich über die die gesamte Länge L der Ausströmkanäle 3A, 3B erstrecken zu können, können die gasdurchströmbaren Kanalwandungsabschnitte beispielsweise als ein mehrschichtiges Metallgewebelaminat ausgebildet werden, wie es in Zusammenhang mit den Figuren 8 und 9 erläutert wird. Ein Gewebelaminat erzeugt eine höhere Druckdifferenz als herkömmliche Lochbleche und kann überdies eine bezüglich der Kanalwandungsabschnitte querschnittsflächendeckende Ausströmfläche bereitstellen.

In der perspektivischen Schnittansicht der Fig. 2 ist eine Zusammensetzung des Sekundärschutzgasstroms S im Fertigungsraum 5 aus mehreren Teilströmen S_1, S_2, S_3 angedeutet, wie sie für einen Sekundärteilstrom S_A aus dem Ausströmkanal 3A, im Speziellen aus den gasdurchströmbaren Kanalwandungsabschnitten, ausströmen:
Der Teilstrom S_1 strömt als "Schutzteilstrom" vom Innenseitenbereich 55 des Ausströmkanals 3A an der Deckenwand 15 entlang und trifft in etwa mittig zwischen den Ausströmkanälen 3A, 3B auf den gegenläufigen Teilstrom des Ausströmkanals 3B. Dadurch werden die Teilströme S_1 abgelenkt und strömen im mittleren Bereich der Strahldurchtrittszone 33 als Senk-Ströme in Richtung der Arbeitsfläche 13 nach unten. Siehe hierzu auch die Strömungslinien des Teilstroms S_1 im Schutzgasströmungsverlauf der Fig. 6.

Der Teilstrom S_2 strömt als "Senkteilstrom" vom Unterseitenbereich 49 zur Arbeitsfläche 13. Der Teilstrom S_3 strömt als "Schutz-Senk-Teilstrom" vom Übergangsbereich 27 schräg in die Strahldurchtrittszone 33 ein und wird dann in Richtung der Arbeitsfläche 13 von den Teilströmen S_1 mitgenommen. Siehe hierzu auch die Strömungslinien der Teilströme S_2 und S_3 im Schutzgasströmungsverlauf der Fig. 7.

Gemeinsam bilden die Teilströme S_1, S_2, S_3 der Ausströmkanäle 3A, 3B eine großflächige Absenkströmung in der Strahldurchtrittszone 33 auf die Arbeitsfläche 13 (siehe Fig. 7).

Eine Gleichverteilung der beidseitigen Sekundärteilströme S_A, S_B über die gesamte Kanallänge und die Ausströmflächen der Ausströmkanäle 3A, 3B (d.h., den gasdurchströmbaren Kanalwandungsabschnitten 55A, 55B, 57A, 57B, 59A, 59B) kann durch ein mehrlagiges Gewebelaminat 67 unterstützt werden (siehe auch Fig. 9b). Das Gewebelaminat 67 erstreckt sich im Kanalinnenraum 53 querschnittsflächendeckend quer zur Kanalrichtung K.

Damit die Ausströmung auch in den mittleren Bereich zwischen den Ausströmkanälen 3A, 3B hinein erfolgen kann und um so einen effizienten "Optik"-Sperrstrom zu gewährleisten, können in den Ausströmkanälen 3A, 3B in regelmäßigen Abständen, insbesondere perforierte, Leitbleche 69 vorgesehen werden. Diese lenken einen Teil des Schutzgases im Kanalinnenraum 53 ab. Eine Perforation der beispielsweise profilierten Leitbleche kann eine Ablösung auf der Saugseite der Leitbleche verhindern und so eine stabile Umströmung ohne große Totwasser-/Ablösegebiete realisieren.

Im in Fig. 5 gezeigten Beispiel weist jeder Ausströmkanal 3A, 3B z.B. mindesten ein gebogenes Leitblech 69 mit Öffnungen 69A auf. Die Leitbleche 69 erstrecken sich vom Innenseitenbereich 55 in Richtung Mitte des Kanalinnenraums 53. Sie lenken entlang des Ausströmkanals 3A, 3B strömendes Gas zu den gasdurchströmbaren Kanalwandungsabschnitten 55A, 55B, 57A, 57B des Innenseitenbereichs 55 und des Übergangsbereichs 57.

Die Figuren 6 und 7 illustrieren einen Strömungsverlauf im Fertigungsraum 5, wie er mit den hierin vorgeschlagenen Konzepten realisiert werden kann.

Fig. 6 zeigt in einer schematischen Schnittdarstellung in der X-Y-Ebene nahe der Deckenwand 15 den Verlauf der Sekundärschutzgasströmung S. Die Schutzteilströme S_1, die von beiden Ausströmkanälen 3A, 3B durch die gasdurchlässigen Kanalwandungen in den Fertigungsraum 5 einströmen und an der Deckenwand 15 entlang strömen, treffen mittig aufeinander und strömen dann gemeinsam in Richtung der Arbeitsfläche 13 (hier in die Zeichenebene hinein). Im gesamten Bereich zwischen den beiden Ausströmkanälen 3A, 3B bildet sich dabei ein homogener, gleichmäßiger Strömungsverlauf aus. Verwirbelungen und Rezirkulationen können reduziert werden. Es wird insbesondere auf die gleich am Anfang nahezu verwirbelungsfreien Strömungslinien im Bereich I hingewiesen. Die reduzierten Verwirbelungen gehen unter anderem auf die gewinkelte Zufuhr (90°-Winkel zwischen Kanalachse K und Übergangskanalachse ZK) mit vergleichbaren Kanalbreiten in der X-Y-Ebene zurück.

Fig. 7 zeigt in einer schematischen Schnittdarstellung in der X-Z-Ebene die sich im Fertigungsraum 5 absenkenden Sekundärschutzgasströmung S sowie die über das Pulverbett strömenden Primärschutzgasströmung P. Auch hier wird ersichtlich, wie die Schutzteilströme S_1 von den Innenseitenbereichen 55 zuerst an der Deckenwand 15 entlang strömen, aufeinandertreffen und dann gemeinsam in Richtung der Arbeitsfläche 13 weiterströmen. Ferner erkennt man, dass die Senkteilströme S_2 von den Unterseitenbereichen 57 zur Arbeitsfläche 13 strömen und dass die Schutz-Senk-Teilströme S_3 aus den Übergangsbereichen 59 schräg in die Strahldurchtrittszone 33 einströmen und dann in Richtung der Arbeitsfläche 13 weiterströmen.

Dadurch bildet sich eine großflächige Absenkströmung 71 in der Strahldurchtrittszone 33 auf die Arbeitsfläche 13 aus. Die Absenkströmung 71 fließt teilweise in den Primärschutzgasstrom P ein und wird dann mit diesem durch die Einsaugöffnung 37A aus dem Fertigungsraum 5 abgesaugt.

Wie bereits angesprochen kann eine Gleichverteilung und eine Homogenisierung einer kompakten Strömung über Gewebelaminate realisiert werden.

Fig. 8 zeigt eine schematische räumliche Explosionsdarstellung eines Gewebelaminats 81, wie es beispielsweise als gasdurchströmbare Kanalwandung in einem der Kanalwandungsabschnitte 55A, 55B, 57A, 57B, 59A, 59B Anwendung finden kann. Das Gewebelaminat 81 umfasst dabei mehrere - beispielhaft sind vier gezeigt -Gewebeschichten 81A, 81B, 81C, 81D. Die Gewebeschichten 81A, 81B, 81C, 81D sind beispielsweise aus Metall, wie z.B. alle gängigen Edelstähle (z.B. 1.4401 oder 1.4404), Chrom-Nickel-Molybdän-Stähle, oder Nickelbasislegierung, z.B. Hastelloy-Legierung oder Inconel-Legierung, ausgeführt und können entsprechend den bei der generative Fertigung vorliegenden Temperaturen im Fertigungsraum 5 ausgesetzt werden. Jede Gewebeschicht 81A, 81B, 81C, 81D des Gewebelaminats 81 weist Gewebemaschen 82 auf, die Durchströmöffnungen für einen strömungshomogenisierenden Durchtritt eines durch das Gewebelaminat 81 strömenden Fluids (Fluidstrom 85A) vorgesehen sind. Die Gewebemaschen 82 sind gleichmäßig nebeneinander - hier beispielhaft aneinander angrenzend in Reihen und Spalten in der jeweiligen Gewebeschicht 81A, 81B, 81C, 81D angeordnet. Beispielhaft können, wie in Fig. 8 angedeutet, in einer einzelnen Gewebeschicht 81A, 81B, 81C, 81D angeordnete Gewebemaschen 82 eine einheitliche Maschenweite 83 in mindestens einer Richtung aufweisen. Beispieldimensionen der Maschenweite 83 liegen im Bereich von 10µm bis 2mm. Die Maschenweiten 83 aufeinanderfolgender Gewebeschichten 81A, 81B, 81C, 81D können in Strömungsrichtung abnehmen. In einigen Ausführungsformen kann die Maschenweite 83 ferner in Strömungsrichtung abschnittsweise ab- oder zunehmen. So kann z.B. eine äußere Schutzlage mit einer Maschenweite vorgesehen werden, die größer ist als die Maschenweite der vorletzten Gewebeschicht. Gewebemaschen 82 haben bevorzugt eine einheitliche Geometrie, zum Beispiel rechteckig, quadratisch, Rauten-förmig, rund oder elliptisch, und bilden z.B. entsprechend geformte Durchströmöffnungen aus.

In Fig. 8 ist ferner schematisch für das Gewebelaminat 81 eine einfassenden Rahmenstruktur 88 gestrichelt angedeutet, mit der optional die Mehrzahl von Gewebeschichten 81A, 81B, 81C, 81D zusammengehalten sowie am Gehäuse befestigt werden kann.

Wie in Fig. 9A am Beispiel eines Kanalbauteils 86 dargestellt kann mit Hilfe des Gewebelaminats 81 der durch das Gewebelaminat 81 strömende Fluidstrom 85A, der ein wie in Fig. 9A gezeigt unregelmäßiges anfängliches Geschwindigkeitsprofil 87A aufweist, homogenisiert werden. Die bewirkte Vergleichmäßigung eines austretenden Fluidstroms 85B ist in Fig. 9A schematisch angedeutet. Wer Fluidstrom 85 B weist ein Geschwindigkeitsprofil 87B auf, dass sich im Wesentlichen mit gleicher Geschwindigkeit über den gesamten Querschnitt des Kanalbauteils 86 erstreckt. Hinsichtlich der Anbindung des Kanalbauteils 86 an einem Niederdruckverdichter wird auf die Fig. 9B verwiesen, wobei der Fachmann die Beschreibung der geometrischen Bedingungen in Fig. 9B (Einlassöffnung, Auslassöffnung, letztere im Kanalbauteil 86 vom Gewebelaminat 81 beabstandet, etc.) entsprechend an die Verbindung des Kanalbauteils 86 über eine Fluidleitung an den Niederdruckverdichter übertragen kann.

Mehrere Metallgewebeschichten können über einen Sinterprozess o.Ä. miteinander verbunden werden. Aufgrund des Materials (z.B. Metall) können diese Gewebeschichten temperaturbeständig und robust gegenüber einer Vielzahl von Medien sein und eignen sich insbesondere auch für Hochtemperaturanwendungen des 3D-Druckens (LMF-Anlagen). Über die definierte und gleichmäßige Maschenweite 83 des Gewebes sowie über ein Verschalten (Aufeinanderfolgen) mehrerer Gewebeschichten können insbesondere Metallgewebe als Strömungshomogenisator von gasförmigen Strömungen in LMF-Anlagen verwendet werden. Strömt ein Fluid durch das Gewebelaminat entsteht ein Druckgefälle zwischen der Einlass- und Auslassfläche resultierend aus dem Strömungswiderstand, welchen das Gewebelaminat aufbaut. Durch den Strömungswiderstand, welcher durch die eingesetzten Maschenweiten festgelegt werden kann, wird über die gesamte Fläche des Gewebelaminats eine definierte Durchfluss-Leistung eingestellt.

Werden insbesondere niedrige Strömungsgeschwindigkeiten (kleiner 1 m/s) beim Austreten des Fluidstroms 85B angestrebt, kann beispielsweise in einem Gaskreislaufsystem einer LMF-Anlage eine Gaszirkulation mit einem Niederdruckverdichter (zum Beispiel Axialventilator oder Seitenkanalverdichter) betrieben werden. Dabei kann der Gasaustausch durch geringe Druckdifferenzen im Bereich von einigen 10 mbar, beispielsweise im Bereich von 1 bis 5 mbar, beidseitig des Gewebelaminats (maximal 200 mbar bis 300 mbar) - d.h., es liegt nur ein geringer Überdruck im Kanalbauteil gegenüber dem Fertigungsraum 5 vor - über den langen Zeitraum des 3D-Druckvorgangs bei einer geringen Leistungsaufnahme des Niederdruckverdichters durchgeführt werden. Allgemein kann der Niederdruckverdichter für die Erzeugung eines kontinuierlichen Gasstroms ausgebildet werden.

Zur Verdeutlichung der Funktion einer Gewebeschicht bzw. eines Gewebelaminats für ein gleichmäßiges Einströmen eines Gases in einen Raum (z.B. in den Fertigungsraum 5 einer LMF-Maschine), zeigt Fig. 9B eine schematische Seitenschnittansicht eines Systems 100 zur Abgabe einer homogenisierten Strömung. Das System umfasst einen Niederdruckverdichter 103 und ein Kanalbauteil 105, das über eine Fluidleitung 107 mit dem Niederdruckverdichter 103 verbunden ist. Der Niederdruckverdichter 103 ist dazu eingerichtet, bei einem Eingangsdruck zugeführtes Gas an einem Verdichterausgang 103A mit einem Ausgangsdruck bereitzustellen, wobei der Ausgangsdruck im Bereich von einigen 10 mbar größer ist als der Eingangsdruck.

Das Kanalbauteil 105 umfasst ein Kanalgehäuse 109 mit einer Einlassöffnung 109A, die mit dem Verdichterausgang 103A Fluidleitung 107 (z.B. ein Rohr) fluidverbunden ist. Ferner umfasst das Kanalgehäuse 109 eine Auslassöffnung 109B zur Ausbildung eines Kanals zwischen der Einlassöffnung 109A und der Auslassöffnung 109B. In anderen Worten dient das Kanalbauteil 105 als Plenum, in dem eine Aufweitung eines aus der Fluidleitung 107 austretenden Gasstroms 113 hin zu einem flächig ausgebildeten Ausströmbereich 115 erfolgt. Der Ausströmbereich 115 kann durch ein planes (flächig ausgebildetes und sich in einer Ebene erstreckendes) Gewebelaminat gebildet werden. Das Gewebelaminat kann mehrere Gewebeschichten umfassen, die gasdurchströmbar sind (siehe z.B. Fig. 9A und die zugehörige Beschreibung).

Jede der Gewebeschichten besteht aus einer Mehrzahl von Gewebemaschen, die Durchströmöffnungen ausbilden, die gemeinsam einen strömungshomogenisierenden Durchtritt des Gases durch das Gewebelaminat zur Ausbildung einer homogenen Ausgangsströmung 117 bewirken. Wie in Fig. 9A können die Gewebemaschen gleichmäßig in Reihen und/oder Spalten in der jeweiligen Gewebeschicht angeordnet sein und in einer einzelnen Gewebeschicht angeordnete Gewebemaschen können eine gemeinsame Maschenweite aufweisen, wobei die Maschenweite beispielsweise zumindest für einige Gewebeschichten von Schicht zu Schicht feiner werden kann. Wie in Fig. 9B angedeutet strömt das Gas der Ausgangsströmung 117 beim/nach Verlassen des Ausströmbereichs 115 in Richtung einer Flächennormale 119 des planen Ausströmbereichs 115.

Die strömungshomogenisierende Wirkung des gasdurchströmbaren Gewebelaminats ermöglicht eine Aufweitung in einem kompakten Plenum sowie eine gleichmäßige Verteilung des Gasstroms im Plenum über eine relativ zur Einlassöffnung 109A großen Fläche des Ausströmbereichs 115. Die Homogenisierung kann selbst bei einer sehr kompakten Bauweise des Aufweitungsbereichs 115 eintreten, wobei dann eventuell höhere Drücke/dichtere Gewebe notwendig werden und Ablenkbleche zusätzlich vorgesehen werden können. Allgemein erlaubt es der hierin offenbarte strömungshomogenisierende Ansatz, dass in Richtung der Flächennormale 119 des planen Ausströmbereichs 115 nur eine geringe Dicke des Plenums (beispielsweise im Bereich von einigen (z.B. einigen zehn) Millimetern, bei z.B. Gewebelaminatdicken im Bereich von ca. 5 mm, sofern das Gewebelaminat einen ausreichend hohen Druckverlust erzeugt) benötigt wird.

Die gleichmäßige Verteilung des austretenden Gases in der Ausgangsströmung 117 über die Fläche des Ausströmbereichs 115 zeigt sich beispielsweise in der Homogenität eines in Fig. 9B angedeuteten Geschwindigkeitsprofils 121 der Ausgangsströmung 117 beim Verlassen des Ausströmbereichs 115. Die Anordnung der Gewebemaschen im Gewebelaminat 81 und Maschenweiten der Gewebemaschen können derart eingerichtet und ausgewählt werden, dass ein Ausströmen von Gas aus dem Kanalgehäuse 109 durch das Gewebelaminat 81 bewirkt wird, bei dem z.B. eine Variation der Strömungsgeschwindigkeit in sehr geringem Abstand, quasi direkt an der Ausströmen Fläche des Gewebelaminats, vom Gewebelaminat 81 im Bereich von 10 Prozent oder weniger liegt. Ferner können die Anordnung der Gewebemaschen im Gewebelaminat 81 und die Maschenweiten der Gewebemaschen derart eingerichtet und ausgewählt werden, dass bei einem Überdruck im Bereich von 1 mbar bis 30 mbar im Plenum eine Ausströmgeschwindigkeit vorliegt, die kleiner als 1 m/s ist.

Die beschriebene Homogenisierung mit einer Gewebeschicht oder einem Gewebelaminat ermöglicht es selbst bei geringem zur Verfügung stehenden Bauraum und einer Zuleitung mit geringem Querschnitt eine gleichmäßige Ausströmung von Gas zu realisieren. Eine gleichmäßige Ausströmung kann so aus einer Wand oder Decke in einen Raum, beispielsweise einen Fertigungsraum, stattfinden, um beispielsweise einen effizienten Spülprozess für eine saubere Fertigungsraumatmosphäre zu gewährleisten.

Die Ausströmung beispielsweise aus den als Metallgewebe ausgebildeten Kanalwandungsabschnitten in Fig. 1 erfolgt gerichtet - in Fig. 9B entlang der Flächennormalen 119 - und mit einer homogenen Geschwindigkeitsverteilung über die gesamte Fläche, ohne größere Strömungshotspots und kleinere makroskopische Verwirbelungen und Rezirkulationen zu generieren. Dies ist ein Vorteil gegenüber herkömmlichen Lochblechkonfigurationen, wie sie im Ausführungsbeispiel der Fig. 10 eingesetzt werden.

Zur Vermeidung von Strömungshotspots und Ungleichmäßigkeiten trägt auch bei, dass die Gewebemaschen gleichmäßig in Reihen und/oder Spalten über die Ausströmfläche verteilt sind und in einer Schicht eine vergleichbare/identische Maschenweite aufweisen. Dies kann einen Vorteil zu Vliesen (z.B. Keramikvliesen) darstellen, bei denen die durchströmbaren Mikrokanäle üblicherweise nicht wie bei einem Gewebe regelmäßig und gleich verteilt, sondern zufällig über die Oberfläche verteilt sind, sodass sich Strömungshotspots und Ungleichmäßigkeiten ergeben, die sich auf eine Ausgangsströmung auswirken können.

Aufgrund der vielfältigen Einstellbarkeit können Gewebelaminate für eine hohe Bandbreite an Strömungsgeschwindigkeiten, innerhalb eines Strömungskanals oder als Ausströmfläche (z.B. Grenzfläche im Bereich einer Wand eines Gehäuses) für eine Vergleichmäßigung und Homogenisierung der Geschwindigkeiten eingesetzt werden. Es ist ferner vorteilhaft, dass das Metallgewebe wie herkömmliche Blechtafeln verarbeitet werden können und Bearbeitungsverfahren wie Laserschneiden, Biegen, Schweißen, zugänglich sind.

Ferner weist der in Fig. 2 gezeigte Flächenstromabgabeabschnitt 35 einen flächigen, in der Tür 9A untergebrachten Zuführkanal 91 auf. Dem Zuführkanal 91 ist in Fig. 2 eine Strömungsrichtung in Z-Richtung zugeordnet. Die Strömungsrichtung verläuft in einem Winkelbereich um 90° zur Strömungsrichtung des Primärstroms P über bevorzugt die gesamte Breite des Primärstroms P (in X-Richtung). Im oberen Bereich des Zuführkanals 91 ist ein gasdurchlässiges, strömungshomogenisiernd wirkendes Gewebelaminat 92 (z.B. aus mehreren Metallgewebeschichten) vorgesehen. Zur Förderung der homogenen und verwirbelungsarmen Umlenkung können Umlenklamellen 36 eingesetzt werden, die den Gasstrom aus der Z-Richtung in die Y-Richtung umlenken. Ferner kann auch hier die 90°-Umlenkung "auf ganzer Breite" dazu genutzt werden, ein rezirkulationsfreies Einströmen des Schutzgases für die Ausbildung des möglichst laminaren und homogenen Primärstroms P zu nutzen.

Wie in Fig. 2 ferner gezeigt kann für eine pulsationsfreie und homogenen Zuströmung somit der verfügbare Zwischenraum im Türblatt der Tür 9A als Beruhigungstrecke verwendet werden. Im Türblatt erfolgt eine vorgelagerte Verteilung des Schutzgasstromes über die gesamte Ausströmbreite. Mit anderen Worten strömt der Schutzgasstrom in der Tür 9A im Wesentlichen orthogonal zur Prozessebene herab und wird dann über die gesamte Ausströmbreite umgelenkt, wodurch gleichmäßige Einströmvektoren in die Prozessebene erzeugt werden können. Die vorgelagerte Verteilung kann mit den angesprochenen Umlenkblechen (Lamellen 36) und einem dahinter geschalteten Lochblech (mit den z.B. runden Öffnungen 35A) mit einer geringen Durchströmfläche ergänzt werden. Eine derartige Leitblechkonfiguration kann eine weitgehend verwirbelungsfreie Umlenkung des Gesamtstroms um in Fig. 2 z.B. 90° in der Tür 9A ermöglichen. Das vorgeschaltete Gewebelaminat 92 kann zusätzlich die Strömungsgeschwindigkeit und Ausströmrichtung vergleichmäßigen.

Fig. 10 zeigt eine alternative Ausführung eines Schutzgasmoduls mit Lochblechen. Ausströmkanäle 3A', 3B' des Schutzgasmoduls haben einen Querschnitt, der dem der Ausströmkanäle 3A, 3B hinsichtlich der Kanalwandung 51 entspricht. Jedoch liegt eine Y-förmige Untergliederung des Kanalinnenraums 53 in drei Bereiche, einem Eintrittsbereich 93, einem Zwischenbereich 95 und einem Bodenbereich 97, vor. Der Zwischenbereich 95 wird durch Zwischenwände 95A, 95B vom Eintrittsbereich 93 und vom Bodenbereich 97 abgegrenzt und der Eintrittsbereich 93 wird vom Bodenbereich 97 durch eine (im Beispiel gasdichten) Zwischenwand 95C getrennt.

Das Schutzgas strömt zuerst in einen Eintrittsbereich 93 durch Löcher 92. Der Eintrittsbereich 93 ist über eine Lochblechkonfiguration auf der Innenseite (hier im Innenseitenbereich 55 und teilweise auf der oberen Fase des Übergangsbereichs 57) über Löcher 93A mit dem Fertigungsraum 5 fluid verbunden.

Ferner kann das Schutzgas vom Eintrittsbereich 93 durch großflächige Öffnungsanordnungen 99 in den Zwischenwänden 95A, 95B über den Zwischenbereich 95 in den Bodenbereich 97 einströmen. Die Öffnungsanordnungen 99 bewirken eine Homogenisierung und Gleichverteilung des Schutzgases durch die hintereinandergeschaltete Lochblechgeometrien.

Der Bodenbereich 97 ist über eine Lochblechkonfiguration auf der Unterseite (hier im Unterseitenbereich 57 und teilweise auf der oberen Fase und der unteren Fase des Übergangsbereichs 57) über Löcher 97A mit dem Fertigungsraum 5 fluid verbunden.

Zusätzlich oder alternativ zu den Lochblechen können Gewebeschichten oder Gewebelaminate vorgesehen werden.

Somit zeigt Fig. 10 ein weiteres Beispiel einer Anordnung von Ausströmkanälen, die jeweils eine Kanalwandung zur Abgrenzung eines Kanalinnenraums umfassen, wobei jeder der Ausströmkanäle gasdurchströmbare Kanalwandungsabschnitte in einem dem jeweils anderen Ausströmkanal zugewandten Innenseitenbereich der Kanalwandung und in einem der Arbeitsfläche zugewandten Unterseitenbereich der Kanalwandung umfasst und wobei die gasdurchströmbaren Kanalwandungsabschnitte in einer Kanalrichtung des Ausströmkanals über eine Ausströmlänge vorgesehen sind, die mindestens dem Ausmaß des Pulverbetts in der Kanalrichtung entspricht.

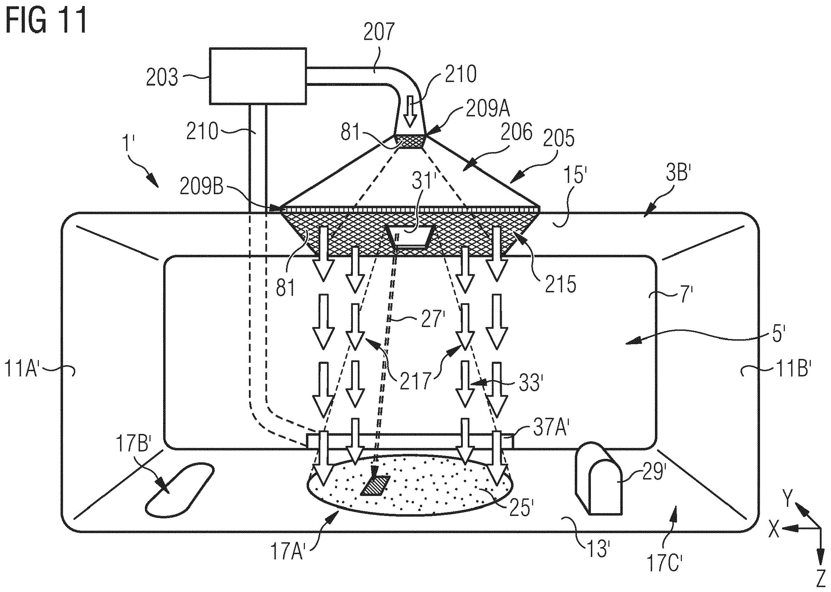

Fig. 11 zeigt eine weitere Ausführungsform einer Fertigungsvorrichtung 1' zur Erzeugung eines großflächigen Absenkstroms unter Verwendung eines Gewebelaminats.

Die Fertigungsvorrichtung 1' stellt wie in Fig. 1 den Fertigungsraum 5' zur generativen Fertigung bereit. Zur weiteren Beschreibung wird ferner auf Fig. 1 verwiesen. Der Fertigungsraum 5' wird beispielsweise ebenfalls von einer Rückwand 7', einer nicht dargestellten Frontwand 9' und zwei Seitenwänden 11A' und 11B' in X- und Y-Richtung begrenzt. Nach unten bzw. oben (d.h., in Z-Richtung) wird der Fertigungsraum 5' durch eine Arbeitsfläche 13' und eine Deckenwand 15' begrenzt.

Ferner erkennt man einen Pulverbettbereich 17A', einen Pulverablagebereich 17B', einen Pulvervorratsbereich 17C', Pulver 25', einen Laserstrahl 27', und einen Schiebers 29'
Die Deckenwand 15' umfasst ein über dem Pulverbettbereich 17A' angeordnetes Schutzglas 31', durch das der Laserstrahl 27' in den Fertigungsraum 5' eingekoppelt wird. Dort durchläuft der Laserstrahl 27' eine Strahldurchtrittszone 33', die sich zwischen dem Schutzglas 31' und dem Pulverbettbereich 17A' erstreckt.

Als Teil eines Schutzgassystems ist in die Deckenwand 15' ein Kanalbauteil 205 eines Systems zur Abgabe einer homogenisierten Strömung integriert. Das Kanalbauteil 205 bildet einen Trichter-förmigen Aufweitungsbereich 206 als Plenum, das in einer Auslassöffnung 209B mündet. Ferner ist in dem Kanalbauteil 205 eine Einlassöffnung 209A vorgesehen, durch die ein von einem Niederdruckverdichter 203 mit einer Fluidleitung 207 zugeführter Gasstrom 210 in den Aufweitungsbereich 206 einströmen kann. Ein Gewebelaminat 81 in der Auslassöffnung 209B bildet einen flächigen Ausströmbereich 215, der eine homogenisierte Ausgangsströmung 217 abgibt.

Der Fertigungsraum 5' stellt eine Zirkulationskammer dar, die mit der Auslassöffnung 209B des Kanalbauteils 205 fluidverbunden ist. Ferner ist der Fertigungsraum 5' (in Fig. 11 insbesondere eine Absorberöffnung 37A') über eine Absaugfluidverbindung 210 mit dem Niederdruckverdichter 203 (insbesondere der Niederdruckseite des Niederdruckverdichters 203) fluidverbunden, wodurch ein geschlossener Schutzgaskreislauf gebildet wird.

Der Ausströmbereich 215 ist durch das mehrere Gewebeschichten umfassende gasdurchströmbare Gewebelaminat 81 ausgebildet, wobei jede Gewebeschicht des Gewebelaminats 81 Gewebemaschen aufweist, die als Durchströmöffnungen für einen strömungshomogenisierenden Durchtritt des Gases in Z-Richtung vorgesehen sind. Hinsichtlich weiterer Details zu Ausführungsformen des Gewebelaminats 81 siehe insbesondere die Beschreibung zur Fig. 8.

Die Ausgangsströmung 217 strömt in Richtung einer Flächennormalen des Gewebelaminats 81, in Fig. 11 in Z-Richtung, sodass sich zwischen dem flächigen Ausströmbereich 215 und der Arbeitsfläche 13 die Ausgangsströmung 217 als ein großflächiger, gleichmäßiger Schutzgas-Absenkstrom ausbildet.

Optional kann in der Einlassöffnung 209A des Kanalbauteils 205 ein weiteres Gewebelaminat 81 vorgesehen werden. Ferner kann in alternativen Ausführungsformen der Ausströmbereich 215 an den Seitenwänden 11A', 11B' oder an der Vorderwand/Tür/Rückwand 7' eines mit Gas zu spülenden Raums vorgesehen werden.

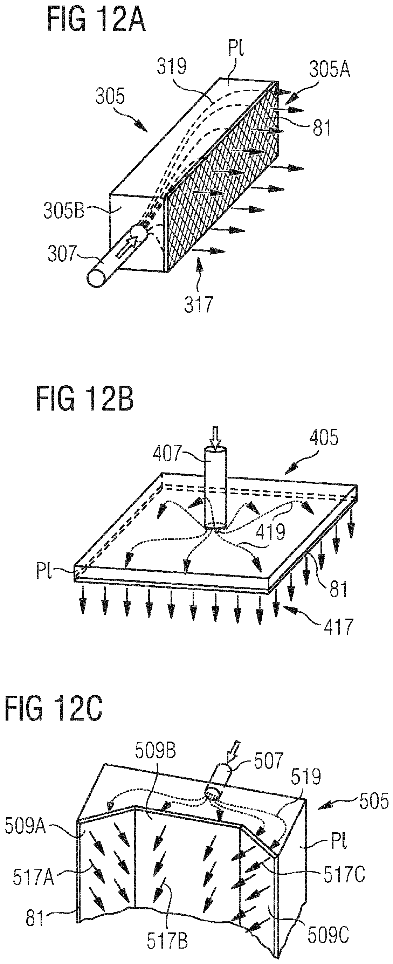

Die Figuren 12A bis 12C zeigen Kanalbauteile 305, 405, 505 mit unterschiedlichen Geometrien. Allgemein können die Kanalgehäuse eine einer Auslassöffnung gegenüberliegende Rückseitenwand und an die Rückwand angrenzende Seitenwände umfassen. Die Auslassöffnung kann zumindest einen Teil einer Ausströmseitenwand bilden, die insbesondere über die Seitenwände mit der Rückwand verbunden ist. Allgemein kann zumindest ein Teil einer Ausströmseitenwand von einem Gewebelaminat gebildet werden. Ferner kann allgemein die Einströmöffnung in der Rückseitenwand oder einer der Seitenwände angeordnet werden. Wie insbesondere in Zusammenhang mit Fig. 12C gezeigt wird, kann das Gewebelaminat eben ausgebildet werden und mindestens einen Flächenabschnitt des Kanalgehäuse ausbilden. Werden Signal optional mehrere Flächenabschnitte als Gewebelaminat ausgebildet, können diese unter einem Winkel im Bereich von 0° bis 90° zueinander ausgerichtet werden, wobei benachbarte Flächenabschnitte insbesondere aneinander angrenzen können.

Beispielsweise verdeutlicht das Kanalbauteil 305 der Fig. 12A die Ausbildung eines Quaderförmigen Plenums P, dessen großen Seitenfläche 305A durch ein Gewebelaminat 81 gebildet wird. Die Gaszufuhr vom Niederdruckverdichter erfolgt beispielsweise an einer kleinen Seitenfläche 305B über eine Fluidleitung 307. Beispielhaft sind Strömungswege 319 im Plenum P angedeutet. Schematisch ist die orthogonal zur großen Seitenfläche 305A austretende Ausgangsströmung 317 mit Pfeilen angedeutet.

Das Kanalbauteil 405 der Fig. 12B ist plattenförmig mit einer quadratischen Grundform ausgebildet, sodass ein Plenum P mit einer im Vergleich zu den lateralen Ausmaßen geringen Höhe vorliegt. Das Plenum P wird mittig von oben über eine Fluidleitung 407 mit Gas mit einem leichten Überdruck von wenigen Millibar bis wenigen 10 mbar versorgt. Das Gas tritt durch ein Gewebelaminat 81, das den Boden des Kanalbauteils 405 ausbildet, gleichmäßig orthogonal zur Bodenfläche als Ausgangsströmung 417 aus. In einigen Ausführungsformen kann ein Prallblech (nicht gezeigt) im Bereich der Fluidleitung 407 im Plenum P vorgesehen werden, um trotz der geringen Höhe vergleichbare Strömungswege 419 (Lauflängen) im Plenum P zwischen der Einlassöffnung und den verschiedenen Bereichen der Auslassöffnung zu erzeugen.

Das Kanalbauteil 505 der Fig. 12 C verdeutlicht, wie mehrere Wandabschnitte eines Kanalge-häuses des Kanalbauteils 505 aus einem Gewebelaminat 81 gebildet werden können. Beispielhaft bilden drei Abschnitte 509A, 509B, 509C eine Frontwand eines Plenums P, aus denen jeweils großflächige homogene Ausgangsströmungen 517A, 517B, 517C austreten. Die drei Abschnitte 509A, 509B, 509C sind beispielhaft unter einem Winkel im Bereich von 10° bis 30° zueinander angeordnet, sodass die seitlichen Ausgangsströmungen 517A, 517C einem auseinanderlaufen der sich ergebenden Gesamtströmung entgegenwirken. Die Gaszufuhr mit einer Fluidleitung 507 ist beispielhaft auf der Rückseite des Kanalbauteils 505 angedeutet. Ferner sind beispielhaft Strömungswege 519 im Plenum P angedeutet.

Die Fluidleitungen in der Figuren 12A bis 2C sind beispielsweise mit Niederdruckverdichtern fluidverbunden, sodass in jedem Beispiel das Plenum P mit einem Überdruck von wenigen Millibar bis zu wenigen 10 mbar mit einem Gas beaufschlagt werden kann.

In den gezeigten Beispielen bilden flächige, insbesondere eben, ausgebildeten Gewebelaminate eine Grenzfläche zu einem Raum aus, in dem eine homogenisierte Ausgangsströmung erzeugt werden soll. Hierzu wird Gas auf eine Einströmseite des Gewebelaminats eingeströmt. Die Gaszufuhr ist derart, dass eine Druckdifferenz von einigen Millibar bis zu einigen 10 mbar, maximal 200 mbar bis 300 mbar, bezüglich der Einströmseite des Gewebelaminats und einer Ausströmseite vorliegt.

Die hierin beschriebenen Aspekte basieren zum Teil auf der Erkenntnis, dass die Praxistauglichkeit einer generativen Fertigungsvorrichtung durch eine großflächige, homogene Absenkströmung in Kombination mit einer großflächigen das Schutzglas entlangströmende Schutzströmung verbessert werden kann, da auf dieser Weise nicht nur Rauch daran gehindert werden kann im Fertigungsraum aufzusteigen und/oder sich am Schutzglas abzusetzen, sondern auch im gesamten Fertigungsraum homogene Strömungsbedingungen geschaffen werden - eine zentrale Grundlage für gleichbleibend hohe Fertigungsqualität.

Beispielhafte Gase, die den hierin offenbarten Strömungskonzepten zugrunde gelegt werden können, umfassen Schutzgase wie Edelgase, wie sie üblicherweise beispielsweise in LMF-Maschinen eingesetzt werden.

### Bezugszeichenliste

Fertigungsvorrichtung 1
Ausströmkanäle 3A, 3B, 3A', 3B'
Fertigungsraum 5
Rückwand 7
Frontwand 9
Tür 9A
Seitenwänden 11A, 11B
Arbeitsfläche 13
Deckenwand 15
Pulverbettbereich 17A
Pulverablagebereich 17B
Pulvervorratsbereich 17C
Substratplatte 19
Bauteil 21
Pulver 25
Laserstrahl 27
Schieber 29
Schutzglas 31
Strahldurchtrittszone 33
Flächenstromabgabeabschnitt 35
Auslassöffnungen 35A
Ansaugabschnitt 37
Einsaugöffnung 37A
Umlenkkasten 41
Zuführkanal 43
Finne 43A
Lochblenden 43B
Übergangkanalabschnitt 45
Zufuhrkanalbreite 47
Ausströmkanalbreite 49
Kanalwandung 51
Kanalinnenraum 53
Innenseitenbereich 55
Unterseitenbereich 57
Übergangsbereich 59
gasdurchströmbare Kanalwandungsabschnitte 55A, 55B, 57A, 57B, 59A, 59B
Fasenaußenflächen 61A, 61B
abgerundete Außenfläche 62
Ausströmlänge 63
Bereiche 65
Gewebelaminat 67
Leitbleche 69
Öffnungen 69A
Absenkströmung 71
Wirbelströmung 73
Metallgewebelaminat 81
Metallgewebeschichten 81A, 81B, 81C, 81D
Maschenweite 83
Strömung 85
Geschwindigkeitsprofil 87A, 87B
Zuführkanal 91
Eintrittsbereich 93
Zwischenbereich 95
Zwischenwand 95A, 95B, 95C
Bodenbereich 97
Öffnungsanordnungen 99
Öffnungen
Radius R
Primärschutzgasstrom P
Sekundärschutzgasstrom S
Sekundärteilstrom S_A, S_B
Ströme S_1, S_2, S_3
Länge L der Ausströmkanäle
Ausmaß A des Pulverbetts Kanalachse K
Übergangkanalachse ZK

## Patentansprüche

1. Fertigungsvorrichtung (1) zur generativen Fertigung eines dreidimensionalen Bauteils (21) aus einem Pulver (25) mit:
einer Arbeitsfläche (13) und einer Deckenwand (15), die einen Fertigungsraum (5) begrenzen, wobei die Arbeitsfläche (13) einen Pulverbettbereich (17A) umfasst, die Deckenwand (15) ein über dem Pulverbettbereich (17A) angeordnetes Schutzglas (31) umfasst und sich zwischen dem Schutzglas (31) und dem Pulverbettbereich (17A) eine Strahldurchtrittszone (33) des Fertigungsraums (5) erstreckt, in den ein Laserstrahl (27) durch das Schutzglas (31) für die Bestrahlung von Pulver (25) im Pulverbettbereich (17A) einstrahlbar ist, und
einem Schutzgassystem mit zwei an der Deckenwand (15), beidseitig der Strahldurchtrittszone (33) angeordneten Ausströmkanälen (3A, 3B), die jeweils eine Kanalwandung (51) zur Abgrenzung eines Kanalinnenraums (53) umfassen, wobei jeder der Ausströmkanäle (3A, 3B) gasdurchströmbare Kanalwandungsabschnitte (55A, 55B, 57A, 57B, 59A, 59B, 55, 57, 59) in einem dem jeweils anderen Ausströmkanal (3A, 3B) zugewandten Innenseitenbereich (55) der Kanalwandung (51) und in einem der Arbeitsfläche (13) zugewandten Unterseitenbereich (57) der Kanalwandung (51) umfasst und die gasdurchströmbaren Kanalwandungsabschnitte (55A, 55B, 57A, 57B, 59A, 59B, 55, 57, 59) entlang einer Kanalachse (K) des Ausströmkanals (3A, 3B) über eine Ausströmlänge (63) vorgesehen sind, die mindestens dem Ausmaß (A) des Pulverbettbereichs (17A) in Richtung der Kanalachse (K) entspricht, und
wobei das Schutzgassystem ferner eine Einsaugöffnung (37A) zum Absaugen des Schutzgases aus dem Fertigungsraum (5) umfasst.

2. Fertigungsvorrichtung (1) nach Anspruch 1, wobei dem Innenseitenbereich (55) ein entlang der Deckenwand (15) gerichteter Schutzteilstrom (S_1) zugeordnet ist, der insbesondere teilweise entlang des Schutzglases (31) fliest, und dem Unterseitenbereich (57) ein senkrecht auf die Arbeitsfläche (13) gerichteter Senkteilstrom (S_2) zugeordnet ist.

3. Fertigungsvorrichtung (1) nach Anspruch 1 oder 2, wobei bei mindestens einem der Ausströmkanäle (3A, 3B) der Innenseitenbereich (55) in einem Übergangsbereich (59) mit einer oder mehreren Fasenaußenflächen (61A, 61B) in den Unterseitenbereich (57) übergeht, wobei mindestens eine der einen oder mehreren Fasenaußenflächen (61A, 61B) insbesondere eine rechteckige ebene Fläche ist.

4. Fertigungsvorrichtung (1) nach Anspruch 1 oder 2, wobei bei mindestens einem der Ausströmkanäle (3A, 3B) der Innenseitenbereich (55) in einem Übergangsbereich (59) mit einer abgerundeten Außenfläche (62), insbesondere stufenlos, in den Unterseitenbereich (57) übergeht, wobei die abgerundete Außenfläche (62) insbesondere einen Krümmungsradius (R) im Bereich von 10 mm bis 200 mm oder einen variierenden Krümmungsradius aufweist.

5. Fertigungsvorrichtung (1) nach Anspruch 4, wobei dem Übergangsbereich (59) mindestens ein in die Strahldurchtrittszone (33) gerichteter Schutz-Senk-Teilstrom (S_3) zugeordnet ist, der insbesondere unter einem Winkel im Bereich von 10° bis 80° zur Deckenwand (15) in die Strahldurchtrittszone (33) eintritt.

6. Fertigungsvorrichtung (1) nach einem der vorhergehenden Ansprüche, wobei mindestens einer der gasdurchströmbaren Kanalwandungsabschnitte (55A, 55B, 57A, 57B, 59A, 59B) als Gewebeschicht oder Gewebelaminat mit mindestens zwei Gewebeschichten, insbesondere als Metallgewebelaminat (81), ausgebildet ist, und
wobei die Gewebeschicht oder das Gewebelaminat Gewebemaschen umfasst, die als Ausströmöffnungen für einen strömungshomogenisierenden Durchtritt von Gas aus dem Kanalinnenraum (53) in den Fertigungsraum (5) vorgesehen sind, und
wobei insbesondere überlagerte Gewebeschichten unterschiedliche Maschenweiten (83) aufweisen.

7. Fertigungsvorrichtung (1) nach einem der vorhergehenden Ansprüche, wobei mindestens einer der gasdurchströmbaren Kanalwandungsabschnitte (55A, 55B, 57A, 57B, 59A, 59B)
- sich über mindestens 60 %, beispielsweise 70 %, 80 % oder 90 %, einer Kanallänge (L) einer der Ausströmkanäle (3A, 3B) hinweg erstrecken und/oder
- ein Vlieslaminat oder eine Lochplatte mit einer Anordnung von Ausströmöffnungen (93A, 97A) umfasst.

8. Fertigungsvorrichtung (1) nach einem der vorhergehenden Ansprüche, wobei mindestens einer der Ausströmkanäle (3A, 3B) umfasst
- mindestens ein Leitblech (69), welches sich vom Innenseitenbereich (55) in Richtung Mitte des Kanalinnenraums (53) erstreckt und durch welches entlang des Ausströmkanals (3A, 3B) strömendes Gas zu einem gasdurchströmbaren Kanalwandungsabschnitts (55A, 55B) des Innenseitenbereich, und optional des Zwischenbereichs (59) hin ablenkbar ist, und wobei das mindestens eine Leitblech (69) insbesondere
- gebogen ist und/oder
- zumindest teilweise, insbesondere nahe einer Mitte des Kanalinnenraums (53), mit Öffnungen (69A) versehen ist, und/oder
- mindestens ein quer zur Kanalachse (K) angeordnete Gewebeschicht, Gewebelaminat, Metallgewebelaminat (81) oder Vlieslaminat.

9. Fertigungsvorrichtung (1) nach einem der vorhergehenden Ansprüche, wobei das Schutzgassystem ferner einen Umlenkkasten (41) mit einem Zuführkanal (43) und zwei mit dem Zuführkanal (43) fluid-verbundene Übergangkanalabschnitte (45) umfasst, wobei
- jeder der Übergangkanalabschnitte (45) auslassseitig mit einem der Ausströmkanäle (3A, 3B) fluid-verbunden ist, und
- mindestens einer der Übergangkanalabschnitte (45) zur Auffächerung eines Gasstroms an einen Querschnitt des fluid-verbundenen Ausströmkanals (3A, 3B) angepasst ist, wobei insbesondere eine senkrecht zu einer Übergangkanalachse (ZK) vorliegende Zuführkanalbreite (47) mindestens 80% einer senkrecht zu einer Kanalachse (K) des Ausströmkanals (3A, 3B) vorliegenden Ausströmkanalbreite (49) beträgt.

10. Fertigungsvorrichtung (1) nach Anspruch 9, wobei
- einer der Übergangkanalabschnitte (45) mit einem der Ausstromkanäle (3A, 3B) unter einem Winkel zwischen einer Übergangkanalachse (ZK) und einer Kanalrichtung (K) des Ausströmkanals in einem Bereich von 80° bis 100° miteinander fluid-verbunden ist und/oder
- die Übergangkanalabschnitte (45) und die Ausstromkanäle (3A, 3B) im Verbindungsbereich jeweils mit einem abgeflachten Querschnitt mit einem Breite-zu-Tiefe-Verhältnis von mindestens 2:1 ausgebildet sind.

11. Fertigungsvorrichtung (1) nach Anspruch 8 oder 9, wobei
mindestens einer der Übergangkanalabschnitte (45) in eine sich zwischen Arbeitsfläche (13) und Deckenwand (15) erstreckende und den Fertigungsraum (5) begrenzende Rückwand (7) der Fertigungsvorrichtung (1) integriert ist oder sich entlang dieser erstreckt.

12. Fertigungsvorrichtung (1) nach einem der vorhergehenden Ansprüche, wobei das Schutzgassystem ferner ein Flächenstromkanalsystem zum Bereitstellen eines Oberflächenstroms (P), der über die Arbeitsfläche (13) strömt, umfasst.

13. Fertigungsvorrichtung (1) nach Anspruch 12, wobei das Flächenstromkanalsystem einen Flächenstromabgabeabschnitt (35) und einen Ansaugabschnitt (37) aufweist und
der Flächenstromabgabeabschnitt (35) dazu ausgebildet ist,
- Gas zu mindestens einer Auslassöffnung (35A) zu führen, die sich streifenförmig entlang der Arbeitsfläche (13) erstrecken, und
- ein gleichmäßiges Einströmen des Gases in den Fertigungsraum (5) zu bewirken, und der Ansaugabschnitt (37) dazu ausgebildet ist,
- Gas aus dem Fertigungsraum (5) durch die Einsaugöffnung (37A) abzusaugen, wobei sich die Einsaugöffnung (37A) streifenförmig entlang der Arbeitsfläche (13) erstreckt, und
- ein gleichmäßiges Einsaugen von Gas aus dem Fertigungsraum (5) zu bewirken.

14. Fertigungsvorrichtung (1) nach Anspruch 13, wobei der Flächenstromabgabeabschnitt (35) einen flächigen Zuführkanal (91) aufweist, dem eine Strömungsrichtung zugeordnet ist, die in einem Winkel in einem Bereich von 80° bis 100° zur Strömungsrichtung des von der Auslassöffnung (37A) austretenden Oberflächenstroms (P) verläuft.

15. Fertigungsvorrichtung (1) nach Anspruch 13 oder 14, wobei das Schutzgassystem einen Strömungsverlauf ausbildet, der umfasst
als Primärströmungskomponente:
- den Oberflächenstrom (P), der in geringem Abstand über die Arbeitsfläche (13) strömt, und als Sekundärströmungskomponente:
- die Schutzteilströme (S_1), die von beiden Ausströmkanälen (3A) an der Deckenwand (15) entlang strömen, aufeinandertreffen und dann gemeinsam in Richtung der Arbeitsfläche (13) weiterströmen,
- die Senkteilströme (S_2), die von den Unterseitenbereichen (57) zur Arbeitsfläche (13) strömen, und
- optional weitere Schutz-Senk-Teilströme (S_3), die aus den Übergangsbereichen (59) schräg in die Strahldurchtrittszone (33) einströmen und dann in Richtung der Arbeitsfläche (13) weiterströmen,
wodurch sich eine Absenkströmung in der Strahldurchtrittszone (33) hin zur Arbeitsfläche (13) ausbildet, die zusammen mit dem Oberflächenstrom (P) durch die Einsaugöffnung (37A) aus dem Fertigungsraum (5) abgesaugt wird.

## Claims

1. A manufacturing device (1) for additive manufacturing of a three-dimensional component (21) made from a powder (25), the manufacturing device comprising:
a working surface (13) and a top wall (15) delimiting a manufacturing space (5), wherein the working surface (13) includes a powder bed region (17A), the top wall (15) includes a protective glass window (31) arranged above the powder bed region (17A), and a beam passage zone (33) of the manufacturing space (5) extends between the protective glass window (31) and the powder bed region (17A), a laser beam (27) for irradiating powder (25) located in the powder bed region (17A) able to be radiated into said beam passage zone through the protective glass window (31), and
a shielding gas system having two outflow ducts (3A, 3B) arranged on the top wall (15) on both sides of the beam passage zone (33), each of the ducts having a duct wall (51) for delimiting a duct interior (53), wherein each of the outflow ducts (3A, 3B) has gas permeable duct wall sections (55A, 55B, 57A, 57B, 59A, 59B, 55, 57, 59) in an inner side region (55) of the duct wall (51) facing the other outflow duct (3A, 3B), respectively, and in an underside region (57) of the duct wall (51) facing the working surface (13), and wherein the gas permeable duct wall sections (55A, 55B, 57A, 57B, 59A, 59B, 55, 57, 59) are provided along a duct axis (K) of the outflow duct (3A, 3B) over an outflow length (63) which is at least equal to the extent (A) of the powder bed region (17A) in the direction of the duct axis (K), and
wherein the shielding gas system further comprises an intake opening (37A) for drawing the shielding gas out of the manufacturing space (5).

2. The manufacturing device (1) according to claim 1, wherein a shielding partial stream (S_1) directed along the top wall (15) is associated with the inner side region (55), the partial stream flowing along the protective glass window (31), in particular partially, and a sinking partial stream (S_2) directed perpendicularly onto the working surface (13) is associated with the underside region (57).

3. The manufacturing device (1) according to claim 1 or 2, wherein, in at least one of the outflow ducts (3A, 3B), the inner side region (55) transitions to the underside region (57) in a transition region (59) that has one or more beveled outer surfaces (61A, 61B), wherein at least one of the one or more beveled outer surfaces (61A, 61B) is in particular a rectangular planar surface.

4. The manufacturing device (1) according to claim 1 or 2, wherein, in at least one of the outflow ducts (3A, 3B), the inner side region (55) transitions to the underside region (57) in a transition region (59) that has a rounded outer surface (62), in particular a continuously rounded outer surface, wherein the rounded outer surface (62) has a radius of curvature (R) in the range of 10 mm to 200 mm, or has a varying radius of curvature.

5. The manufacturing device (1) according to claim 4, wherein at least one shielding-sinking partial stream (S_3) directed into the beam passage zone (33) is associated with the transition region (59), said shielding-sinking partial stream entering the beam passage zone (33) at an angle that is in the range of 10° to 80° relative to the top wall (15).

6. The manufacturing device (1) according to one of the preceding claims, wherein at least one of the gas-permeable duct wall sections (55A, 55B, 57A, 57B, 59A, 59B) is designed as a fabric layer or a fabric laminate having at least two fabric layers, in particular as a metal-fabric laminate (81), and
wherein the fabric layer or the fabric laminate comprises fabric meshes provided as outflow openings for flow-homogenizing passage of gas out of the duct interior (53) into the manufacturing space (5), and
wherein in particular overlapping fabric layers have different mesh sizes (83).

7. The manufacturing device (1) according to one of the preceding claims, wherein at least one of the gas-permeable duct wall sections (55A, 55B, 57A, 57B, 59A, 59B)
- extends over at least 60%, for example 70%, 80% or 90%, of a duct length (L) of one of the outflow ducts (3A, 3B) and/or
- comprises a nonwoven laminate or a perforated plate having an arrangement of outflow openings (93A, 97A).

8. The manufacturing device (1) according to one of the preceding claims, wherein at least one of the outflow ducts (3A, 3B) comprises
- at least one baffle (69) extending from the inner side region (55) in the direction of the center of the duct interior (53), gas flowing along the outflow duct (3A, 3B) being deflectable toward a gas-permeable duct wall section (55A, 55B) of the inner side region, and optionally of the intermediate region (59), and wherein, in particular, the at least one baffle (69)
- is curved and/or
- is provided with openings (69A) close to a center of the duct interior (53), and/or
- at least one fabric layer, fabric laminate, metal-fabric laminate (81), or nonwoven laminate arranged transversely relative to the duct axis (K).

9. The manufacturing device (1) according to one of the preceding claims, wherein the shielding gas system further comprises a redirection box (41) with a feed duct (43) and two transition duct sections (45) that are fluidically connected to the feed duct (43), wherein
- each of the transition duct sections (45) is fluidically connected to one of the outflow ducts (3A, 3B) on the outlet side, and
- at least one of the transition duct sections (45) is adapted to fan out a stream of gas at a cross-section of the fluidically-connected outflow duct (3A, 3B), wherein in particular a feed duct width (47) perpendicular to a transition duct axis (ZK) is at least 80% of an outflow duct width (49) which is perpendicular to a duct axis (K) of the outflow duct (3A, 3B).

10. The manufacturing device (1) according to claim 9, wherein
- one of the transition duct sections (45) is fluidically connected together with one of the outflow ducts (3A, 3B) at an angle, between a transition duct axis (ZK) and a duct direction (K) of the outflow duct, in a range of 80° to 100°, and/or
- in the connection region, the transition duct sections (45) and the outflow ducts (3A, 3B) are designed with a flattened cross-section having a width-to-depth ratio of at least 2:1 in each case.

11. The manufacturing device (1) according to claim 8 or 9, wherein
at least one of the transition duct sections (45) is integrated into a rear wall (7) of the manufacturing device (1), the rear wall extending between the working surface (13) and the top wall (15) and delimiting the manufacturing space (5).

12. The manufacturing device (1) according to one of the preceding claims, wherein the shielding gas system further comprises a surface stream duct system for supplying a surface stream (P) which flows over the working surface (13).

13. The manufacturing device (1) according to claim 12, wherein the surface stream duct system has a surface stream discharge section (35) and an intake section (37), and the surface stream discharge section (35) is designed to
- guide gas to at least one outlet opening (35A) which extends in the shape of a strip along the working surface (13), and
- bring about a uniform inflow of the gas into the manufacturing space (5), and the intake section (37) is designed to
- draw gas from the manufacturing space (5) through the intake opening (37A), wherein the intake opening (37A) extends in the shape of a strip along the working surface (13), and
- bring about an even intake of gas from the manufacturing space (5).

14. The manufacturing device (1) according to claim 13, wherein the surface stream discharge section (35) has a flat feed duct (91), a direction of flow associated with the flat feed duct running at an angle in the range of 80° to 100° relative to the direction of flow of the surface stream (P) emerging from the outlet opening (37A).

15. The manufacturing device (1) according to claim 13 or 14, wherein the shielding gas system forms a flow pattern which comprises
as a primary flow component:
- the surface stream (P), which flows over the working surface (13) at a small separation therefrom, and as a secondary flow component:
- the shielding partial streams (S_1) which flow from both outflow ducts (3A) along the top wall (15), meet each other, and then continue flowing together in the direction of the working surface (13),
- the sinking partial streams (S_2) which flow from the underside regions (57) to the working surface (13), and
- optionally, further shielding-sinking partial streams (S_3) which flow from the transition regions (59) obliquely into the beam passage zone (33) and then continue flowing in the direction of the working surface (13),
as a result of said pattern a sinking flow is formed in the beam passage zone (33) toward the working surface (13), the flow drawn, together with the surface stream (P), through the intake opening (37A) out of the manufacturing space (5).

## Revendications

1. Dispositif de fabrication (1) pour la fabrication additive d'un composant tridimensionnel (21) à partir d'une poudre (25), comportant :
une surface de travail (13) et une paroi de plafond (15) qui délimitent un espace de fabrication (5), dans lequel la surface de travail (13) comprend une zone de lit de poudre (17A), la paroi de plafond (15) comprend un verre de protection (31) qui est agencé au-dessus de la zone de lit de poudre (17A), et une zone de passage de faisceau (33) de l'espace de fabrication (5) s'étend entre le verre de protection (31) et la zone de lit de poudre (17A), dans laquelle un faisceau laser (27) peut être envoyé à travers le verre de protection (31) pour l'irradiation de poudre (25) dans la zone de lit de poudre (17A), et
un système de gaz de protection avec deux canaux d'évacuation (3A, 3B) agencés sur la paroi de plafond (15) des deux côtés de la zone de passage de faisceau (33), comprenant chacun une paroi de canal (51) pour délimiter un espace interne de canal (53), dans lequel chacun des canaux d'évacuation (3A, 3B) comporte des sections de paroi de canal à flux gazeux (55A, 55B, 57A, 57B, 59A, 59B, 55, 57, 59) dans une zone côté intérieur (55) de la paroi de canal (51) faisant face audit autre canal d'évacuation (3A, 3B) et dans une zone côté inférieur (57) de la paroi de canal (51) faisant face à la surface de travail (13) et les sections de paroi de canal à flux gazeux (55A, 55B, 57A, 57B, 59A, 59B, 55, 57, 59) sont pourvues le long d'un axe de canal (K) du canal de flux (3A, 3B) sur une longueur de sortie flux (63) qui correspond au moins à l'étendue (A) de la zone de lit de poudre (17A) en direction de l'axe du canal (K), et
dans lequel le système de gaz de protection comprend en outre une ouverture d'aspiration (37A) pour aspirer le gaz de protection hors de l'espace de fabrication (5).

2. Dispositif de fabrication (1) selon la revendication 1, dans lequel un flux partiel de protection (S_1) dirigé le long de la paroi de plafond (15) qui s'écoule en particulier partiellement le long du verre de protection (31) est associé à la zone côté intérieur (55), et un flux partiel descendant (S_2) dirigé perpendiculairement à la surface de travail (13) est associé à la zone côté inférieur (57).

3. Dispositif de fabrication (1) selon la revendication 1 ou 2 dans lequel, dans au moins un des canaux d'évacuation (3A, 3B), la zone côté intérieur (55) se joint à la zone côté inférieur (57) via une zone de transition (59) avec une ou plusieurs surfaces extérieures chanfreinées (61A, 61B), dans lequel au moins l'une desdites une ou plusieurs surfaces extérieures chanfreinées (61A, 61B) est en particulier une surface plane rectangulaire.

4. Dispositif de fabrication (1) selon la revendication 1 ou 2 dans lequel, dans au moins un des canaux d'évacuation (3A, 3B), la zone côté intérieur (55) se joint, en particulier de manière continue, à la zone côté inférieur (57) dans une zone de transition (59) avec une surface extérieure arrondie (62), dans lequel la surface extérieure arrondie (62) présente notamment un rayon de courbure (R) compris entre 10 mm et 200 mm ou un rayon de courbure variable.

5. Dispositif de fabrication (1) selon la revendication 4, dans lequel au moins un flux partiel descendant de protection (S_3) dirigé vers la zone de passage de faisceau (33) est associé à la zone de transition (59), ledit flux entrant en particulier dans la zone de passage de faisceau (33) en formant un angle compris dans une plage de 10° à 80° par rapport à la paroi du plafond (15).

6. Dispositif de fabrication (1) selon l'une des revendications précédentes, dans lequel au moins l'une des sections de paroi de canal à flux gazeux (55A, 55B, 57A, 57B, 59A, 59B) est conçue sous forme d'une couche de tissu ou d'un stratifié de tissu avec au moins deux couches de tissu, en particulier sous forme d'un stratifié de tissu métallique (81), et
dans lequel la couche de tissu ou le stratifié de tissu comprend des mailles de tissu qui sont pourvues comme ouvertures d'évacuation pour un passage de gaz homogénéisant le flux sortant de l'espace interne de canal (53) dans l'espace de fabrication (5), et
dans lequel les couches de tissu superposées comportent en particulier des tailles de maille (83) différentes.

7. Dispositif de fabrication (1) selon l'une des revendications précédentes, dans lequel au moins l'une des sections de paroi de canal à flux gazeux (55A, 55B, 57A, 57B, 59A, 59B)
- s'étend sur au moins 60 %, par exemple 70 %, 80 % ou 90 %, d'une longueur de canal (L) d'un des canaux d'évacuation (3A, 3B), et/ou
- comporte un stratifié non tissé ou une plaque perforée avec un agencement d'ouvertures d'évacuation (93A, 97A).

8. Dispositif de fabrication (1) selon l'une des revendications précédentes, dans lequel au moins un des canaux d'évacuation (3A, 3B) comprend
- au moins un déflecteur (69) qui s'étend depuis la zone côté intérieur (55) en direction du centre de l'espace interne de canal (53) et à travers lequel un gaz qui s'écoule dans le canal d'évacuation (3A, 3B) peut être défléchi vers une section de paroi de canal (55A, 55B) de la zone côté intérieur à flux gazeux, et éventuellement de la zone intermédiaire (59), et dans lequel en particulier au moins un déflecteur (69)
- est incurvé, et/ou
- est au moins partiellement pourvu d'ouvertures (69A), en particulier près du centre de l'espace interne de canal (53), et/ou
- comporte au moins une couche de tissu, de stratifié de tissu, de stratifié de tissu métallique (81) ou de stratifié non tissé disposée transversalement à l'axe de canal (K).

9. Dispositif de fabrication (1) selon l'une des revendications précédentes, dans lequel le système de gaz de protection comprend en outre une boîte de dérivation (41) avec un canal d'alimentation (43) et deux sections de canal de transition (45) connectées fluidiquement au canal d'alimentation (43), dans lequel
- chacune des sections de canal de transition (45) est connectée fluidiquement côté sortie à l'un des canaux d'évacuation (3A, 3B), et
- au moins l'une des sections de canal de transition (45) est adaptée pour disperser un flux de gaz dans une section transversale du canal d'évacuation (3A, 3B) connecté fluidiquement, dans lequel en particulier une largeur disponible du canal d'alimentation (47) perpendiculaire à un axe du canal de transition (ZK) est d'au moins 80 % d'une largeur disponible du canal d'évacuation (49) perpendiculaire à un axe de canal (K) du canal d'évacuation (3A, 3B).

10. Dispositif de fabrication (1) selon la revendication 9, dans lequel
- l'une des sections de canal de transition (45) est connectée fluidiquement à l'un des canaux d'évacuation (3A, 3B) selon un angle entre l'axe du canal de transition (ZK) et la direction de canal (K) du canal d'évacuation compris dans une plage de 80° à 100°, et/ou
- les sections de canal de transition (45) et les canaux d'évacuation (3A, 3B) dans la zone de jonction sont respectivement conçus avec une section transversale aplatie présentant un rapport largeur/profondeur d'au moins 2:1.

11. Dispositif de fabrication (1) selon la revendication 8 ou 9, dans lequel au moins l'une des sections de canal de transition (45) est intégrée dans une paroi arrière (7) du dispositif de fabrication (1) ou s'étend le long de celle-ci, ladite paroi arrière s'étendant entre la surface de travail (13) et la paroi du plafond (15) et délimitant l'espace de fabrication (5).

12. Dispositif de fabrication (1) selon l'une des revendications précédentes, dans lequel le système de gaz de protection comprend en outre un système de canaux de flux de surface pour procurer un flux de surface (P) qui s'écoule sur la surface de travail (13).

13. Dispositif de fabrication (1) selon la revendication 12, dans lequel le système de canaux de flux de surface comporte une section de distribution de flux de surface (35) et une section d'aspiration (37), et la section de distribution de flux de surface (35) est conçue pour
- amener le gaz vers au moins une ouverture d'évacuation (35A), qui s'étend en forme de bande le long de la surface de travail (13), et
- assurer un flux uniforme de gaz entrant dans l'espace de fabrication (5), et la section d'aspiration (37) est conçue de manière à
- aspirer le gaz de l'espace de fabrication (5) à travers l'ouverture d'aspiration (37A), dans lequel l'ouverture d'aspiration (37A) s'étend en forme de bande le long de la surface de travail (13), et
- assurer une aspiration uniforme du gaz de l'espace de fabrication (5).

14. Dispositif de fabrication (1) selon la revendication 13, dans lequel la section de distribution de flux de surface (35) comporte un canal d'alimentation plat (91) auquel est associée une direction d'écoulement qui forme un angle compris dans une plage de 80° à 100° par rapport à la direction du flux de surface (P) sortant de l'ouverture d'évacuation (37A).

15. Dispositif de fabrication (1) selon la revendication 13 ou 14, dans lequel le système de gaz de protection constitue un chemin d'écoulement qui comprend
comme composante de flux principale :
- le flux de surface (P), qui s'écoule à courte distance sur la surface de travail (13), et comme composantes de flux secondaires :
- les flux partiels de protection (S_1), qui s'écoulent des deux canaux d'évacuation (3A) le long de la paroi de plafond (15), se rencontrent et continuent ensuite à s'écouler ensemble en direction de la surface de travail (13),
- les flux partiels descendants (S_2), qui s'écoulent depuis les zones côté inférieur (57) vers la surface de travail (13), et
- éventuellement d'autres flux partiels descendants de protection (S_3), qui s'écoulent obliquement depuis les zones de transition (59) dans la zone de passage de faisceau (33) et continuent ensuite à s'écouler en direction de la surface de travail (13),
moyennant quoi un flux descendant est formé dans la zone de passage de faisceau (33) vers la surface de travail (13), qui est aspiré conjointement au flux de surface (P) hors de l'espace de fabrication (5) à travers l'ouverture d'aspiration (37A).
